# FASCICULE DE BREVET EUROPEEN

(11) **EP 0 994 784 B1**
(45) Date de publication et mention de la délivrance du brevet: **05.03.2003**
(21) Numéro de dépôt: 99903630.4
(22) Date de dépôt: 14.01.1999
(51) Int. Cl.: B60C 15/02

(54) **SIMPLIFICATION DU MONTAGE ET DU DEMONTAGE D'UN PNEUMATIQUE SUR ET HORS DE SA JANTE**
VEREINFACHTE MONTAGE UND DEMONTAGE EINES REIFENS AUF EINE FELGE
SIMPLIFIED METHOD FOR MOUNTING A TYRE ON ITS RIM AND REMOVING IT THEREFROM

(30) Priorité: 20.01.1998 FR 9800635
(43) Date de publication de la demande: 26.04.2000
(73) Titulaire: Compagnie Générale des Etablissements MICHELIN-MICHELIN & CIE, 63040 Clermont-Ferrand Cedex 09 (FR)
(72) Inventeur: DEAL, Michel, F-03110 Saint-Rémy-en-Rollat (FR)
(74) Mandataire: Bauvir, Jacques
(86) Numéro de dépôt international: EP9900175
(87) Numéro de publication internationale: WO99037491

(56) Documents cités:
- EP-A- 0 114 782
- FR-A- 1 136 846
- FR-A- 2 154 361
- US-A- 2 519 937
- US-A- 3 913 653
- US-A- 4 453 583

## Description

La présente invention se rapporte aux enveloppes de pneumatiques. Plus particulièrement, elle concerne le montage et le démontage d'une enveloppe de pneumatique sur et hors d'une jante, et elle concerne aussi par voie de conséquence le montage et le démontage des enveloppes de pneumatiques sur un véhicule par exemple pour leur remplacement.

On sait que l'évolution des roues équipées de pneumatiques a abouti à une règle de conception qui, actuellement, consiste à rendre la roue facilement démontable du véhicule, le pneu étant amovible par rapport à la roue par une opération faite en atelier avec des machines spécialisées. Comme bien connu, la roue est démontable du moyeu d'un véhicule le plus souvent en dévissant une couronne de boulons. Les roues, les jantes et les bourrelets d'une enveloppe de pneumatique font l'objet de normes de construction qui dictent les formes extérieures et dimensions de ces objets (voir par exemple l'ETRTO en Europe).

La plupart des ensembles roues et pneumatiques sont construits selon le principe qui vient d'être évoqué. C'est le cas de la quasi totalité des équipements pour véhicule de tourisme. C'est aussi le cas de la plupart des équipements pour poids lourd, pour engins de génie civil, pour engins agricoles ou forestiers, etc. En ce qui concerne les plus grandes dimensions, par exemple pour équiper des engins de génie civil, les ensembles sont construits suivant des principes comparables si ce n'est que la jante est en général réalisée en plusieurs pièces assemblées par une couronne de boulons. Cela correspond à une section de l'enveloppe de pneumatique ayant l'allure générale d'un "Ω" ouvert du côté de l'axe de rotation du pneumatique, qui s'avère plutôt plus simple à fabriquer que d'autres types de sections (voir par exemple le tore fermé); les moyens de fabrications disponibles ont été développés et optimisés pour ce type de pneumatique. La forme en "Ω" ouvert est également appréciée parce qu'elle permet d'inspecter l'intérieur de l'enveloppe et elle permet d'accéder à l'intérieur de l'enveloppe pour la réparer, le cas échéant.

L'état actuel de la technique est le résultat d'une évolution technologique qui, au cours du temps, s'est attachée à proposer des ensembles pneumatique et roue aussi faciles que possible à monter et à démonter du véhicule. C'est ainsi que la solution proposée pour les véhicules de tourisme permet l'enlèvement de l'ensemble roue et pneumatique du moyeu d'une façon suffisamment simple pour qu'elle soit à la portée de l'utilisateur final.

Il y a eu bien peu d'évolutions de la technologie au cours des décennies passées en ce qui concerne le principe de montage d'une enveloppe de pneumatique sur la roue et le principe de montage de la roue sur un véhicule. Dans certaines applications spécifiques, comme des ensembles roue et pneu pour les voitures de course (comme les Formule 1), afin de pouvoir procéder à un montage/démontage des équipements aussi rapidement que possible, on utilise une roue à attache centrale, permettant de fixer très rapidement la roue au moyeu du véhicule. Mais, ce type de fixation impose l'usage de clés de serrage et de desserrage bien spécifiques, dont on ne dispose pas dans la plupart des ateliers de mécanique. Le problème du temps de montage et démontage des équipements roues et pneumatiques se pose aussi pour les flottes de Poids Lourds ou pour les engins de génie civil.

Dans la suite de l'exposé, convenons de réserver l'expression "enveloppe de pneumatique" à l'objet comportant deux flancs attachés à une partie sommet comportant une bande de roulement, les deux flancs se terminant radialement vers l'intérieur chacun par un bourrelet. C'est l'objet industriel tel qu'il est couramment fabriqué de nos jours. On appelle "jante" l'objet indéformable aux sollicitations de service, sur lequel l'enveloppe de pneumatique est montée, les bourrelets servant à positionner et à "accrocher" le pneumatique sur la jante. Une "roue" comporte une jante et les moyens pour monter cette jante sur un moyeu, c'est à dire par exemple et le plus souvent un disque de roue. Convenons d'appeler "pneumatique" l'ensemble constituant un tore délimitant une enceinte étanche que l'on peut gonfler à la pression nominale de fonctionnement prévue par le concepteur. Une enveloppe de pneumatique montée sur une jante est l'une des façons possibles de réaliser un pneumatique (au sens donné au mot « pneumatique» ci-dessus).

Quelle que soit la forme de réalisation, le montage d'une enveloppe de pneumatique sur une jante consiste à positionner les bourrelets sur des sièges de jante et contre des rebords de jante. Chaque siège de jante impose un centrage (radialement) et présente en générale une légère conicité permettant un certain serrage de l'enveloppe de pneumatique lorsque l'on déplace axialement le bourrelet vers et jusque contre le rebord, qui lui impose un positionnement axial par rapport à la portée de fixation de la roue sur le moyeu du véhicule. En d'autres termes, on peut considérer que les sièges de jante positionnent les bourrelets par rapport à l'axe de rotation de la jante, tandis que les rebords de jante positionnent les bourrelets par rapport à une référence perpendiculaire à l'axe de rotation de la jante. Outre la fonction d'imposer une position géométriquement précise au bourrelet de l'enveloppe de pneumatique, le siège de jante et le rebord de jante ont aussi pour fonction d'assurer l'étanchéité entre la jante et l'enveloppe de pneumatique, et ont pour fonction de permettre, par le biais d'un serrage suffisant du pneumatique sur sa jante, de transmettre un couple entre la jante et l'enveloppe de pneumatique.

La présente invention a pour objectif de simplifier radicalement le montage et le démontage d'un pneumatique sur et hors du véhicule qu'il équipe. Suivant un aspect de la présente invention, le montage et le démontage d'une enveloppe de pneumatique ou d'un pneumatique sur et hors de la jante qui le supporte ne nécessitent ni machine de montage spécialisée comme celles permettant de faire franchir le rebord des jantes par les bourrelets des enveloppes de pneumatique, ni le serrage ou le desserrage d'un grand nombre de boulons. L'invention propose une solution qui permet d'enfiler un pneumatique sur un support que l'on conviendra d'appeler "jante" (parce que c'est un support non déformable aux sollicitations de service) d'une façon très simple : un simple déplacement transversal relatif entre pneumatique et jante suffit, le pneumatique et la jante restant à axes confondus pendant le mouvement de translation relative.

L'invention propose un pneumatique torique comportant, vu en position de montage sur une jante adaptée :
- une base de montage sur la jante, ladite base formant manchon s'étendant transversalement, et étant apte à former un tore fermé définissant une enceinte étanche ladite base constituant la paroi radialement la plus intérieure dudit tore
- ladite base étant destinée à être montée sur la jante,
- des moyens de blocage, pour immobiliser axialement dans l'un des deux sens au moins le pneumatique sur la jante, lesdits moyens de blocage étant :
   - aménagés sur la face radialement intérieure de la base
   - destinés à coopérer avec une portée complémentaire aménagée sur la jante pour s'opposer à tout mouvement relatif entre pneumatique et jante axialement dans ledit sens au moins,
   - aménagés dans une partie de la base qui présente un degré de flexibilité entre une position naturelle relâchée et une position contrainte radialement vers l'extérieur dans laquelle ces moyens de blocage sont libres de tout engagement avec ledit élément complémentaire, ladite partie de la base et les moyens de blocage étant conformés et constitués de façon à ce que, lorsque ladite enceinte est à la même pression que la pression atmosphérique prévalant hors de l'enceinte, les moyens de blocage sont engagés avec l'élément complémentaire pour que le pneumatique soit automatiquement bloqué dans ledit au moins un sens sur la jante, la libération des moyens de blocage imposant de soumettre ceux-ci à l'action de moyens extérieurs agissant pour faire prendre auxdits moyens de blocage ladite position contrainte radialement vers l'extérieur.

Selon les réalisations, les « moyens de blocage » peuvent prendre beaucoup de formes différentes, dont certaines leur confèrent une allure de verrou mécanique localisé, et d'autres leur confère une allure plus répartie. On désigne ici des moyens qui contribuent à l'immobilisation du pneumatique sur la jante, et qui contribuent à la sécurité de cette immobilisation. Notons aussi que la position dite « naturelle relâchée » des moyens de blocage peut être différente de celle qu'ils ont lorsqu'ils sont engagés avec la portée complémentaire de la jante, celle-ci (position engagée) étant en général une position intermédiaire entre la position naturelle relâchée et la position contrainte radialement vers l'extérieur dans laquelle ces moyens de blocage sont libres de tout engagement avec ledit élément complémentaire.

Suivant un mode de réalisation particulier, lesdits moyens de blocage comprennent un élément de blocage constitué sous la forme d'une protubérance ou d'une rainure, aménagé sur la face radialement intérieure de la base axialement à une position intermédiaire, ledit élément de blocage ayant une hauteur (H) prédéterminée mesurée parallèlement à un rayon à partir de la face intérieure de la base, ladite portée complémentaire aménagée sur la jante étant adaptée audit élément de blocage.

On sait qu'un pneumatique comporte en général une partie sommet comprenant une bande de roulement. Le concept de l'invention ayant été défini ci-dessus, précisons comment il convient d'adapter ledit degré de flexibilité (par le choix des matériaux, le dimensionnement) pour un excellent fonctionnement de l'invention. Il convient que, lorsque le pneumatique est dans une configuration de tore fermé définissant une enceinte étanche, une mise en dépression de l'enceinte provoque un déplacement dudit élément de blocage d'ampleur voulue vers les plus grands rayons avant de provoquer une déformation du sommet dont l'ampleur s'oppose audit déplacement de la base vers les plus grands rayons. Il convient donc que, par un dimensionnement judicieux de l'élément de blocage et de la base qui le supporte, ainsi que par un dimensionnement judicieux de la partie sommet (dont la rigidité doit être suffisante), l'augmentation en diamètre de l'élément de blocage n'impose pas d'efforts trop importants, ou en tout cas que la partie sommet résiste suffisamment pour ne pas s'effondrer. De préférence, il convient que ce qui est exposé ci-dessus reste vrai quel que soit le degré d'usure du pneumatique pour que le démontage puisse être effectué dans les mêmes conditions que le montage. Cependant, comme on le verra dans la suite, certaines applications de l'invention ne font pas appel à une mise en dépression de l'enceinte interne du pneumatique. Il en résulte que cet aspect donnant une règle de réalisation n'est pas universel.

Sous un autre aspect, l'invention propose un ensemble pneumatique torique et jante associée, ladite jante étant en une seule pièce, ledit pneumatique torique comportant, vu en position de montage sur une jante adaptée :
- deux flancs,
- une base de montage sur la jante, ladite base formant manchon s'étendant transversalement à partir de chaque flanc en direction de l'autre flanc, l'extrémité radialement intérieure des flancs étant prolongée par ladite base,
- une partie sommet comprenant la bande de roulement et reliée à l'extrémité radialement supérieure des flancs,
dans lequel ladite base
- est apte à former un tore fermé définissant une enceinte étanche, en complément avec les flancs et la partie sommet, même lorsque le pneumatique n'est pas monté sur la jante,
- comporte une partie concourant au blocage sur la jante, située axialement entre les flancs, ladite partie concourant au blocage présentant à l'état libre de toute contrainte un périmètre minimal (Pm),
la jante comportant une zone de support dans la projection radiale de ladite base lorsque l'on considère le pneumatique en position de montage sur la jante, ladite zone de support présentant un périmètre minimal (Pjm) en regard de la partie de la partie concourant au blocage et, axialement d'un côté au moins de la partie présentant le périmètre minimal (Pjm), une zone présentant un périmètre maximal (PjM) plus grand que (Pjm), la totalité de la jante située dudit côté présentant en toute position axiale un périmètre inférieur à (PjM), ledit périmètre minimal (Pm) de la partie concourant au blocage étant inférieur au périmètre maximal (PjM) de jante, ladite partie concourant au blocage étant extensible élastiquement, de telle sorte que, lorsque le pneumatique est en place sur la jante, la partie concourant au blocage coopère avec la jante pour s'opposer à tout mouvement relatif du pneumatique par rapport à la jante au moins axialement vers ledit côté.

La suite décrit plusieurs modes de réalisation de l'invention que l'on peut classer en trois familles :
- La première famille utilise des enveloppes de pneumatiques d'allure identique ou très proche de la forme des enveloppes de pneumatiques en usage courant à la date de priorité de la présente invention. Il s'agit des enveloppes de pneumatiques qui s'accrochent sur la jante contre un rebord situé axialement à l'extérieur de la jante. On consultera par exemple les normes ETRTO en vigueur à la date de priorité de la présente invention pour avoir des indications plus précises sur la forme normalisée des bourrelets d'enveloppes de pneumatiques et des jantes correspondantes.
- Une deuxième famille utilise une enveloppe de pneumatique ayant l'allure générale d'un tore fendu dans sa paroi radialement intérieure.
- Enfin, une troisième famille utilise le principe d'un pneumatique tubulaire : il s'agit d'un pneumatique en forme de tore constituant une cavité fermée et étanche obtenue lors du moulage du pneumatique.

Les deuxième et troisième familles proposent de développer une enveloppe de pneumatique ou un pneumatique tubulaire fermé, non couramment disponibles à ce jour. La première famille, quant à elle, permet d'utiliser les enveloppes de pneumatiques existant à ce jour, en leur ajoutant une virole spécifiquement développée pour, par association avec une enveloppe de pneumatique usuelle, constituer un pneumatique ayant les propriétés de montabilité et de démontabilité comme proposé par la présente invention.

L'invention s'étend donc aussi à une virole destinée à être montée sous les bourrelets d'une enveloppe de pneumatique comportant un sommet, deux flancs terminés chacun par un bourrelet, pour constituer, après montage des bourrelets sur la virole, un pneumatique destiné à être monté sur une jante adaptée, ladite virole comprenant deux sièges pour recevoir chacun un bourrelet et comportant des moyens de blocage pour immobiliser axialement dans l'un des deux sens au moins le pneumatique sur la jante, lesdits moyens de blocage étant :
- aménagés sur la face radialement intérieure de la virole,
- destinés à coopérer avec une portée complémentaire aménagée sur la jante pour s'opposer à tout mouvement relatif entre pneumatique et jante axialement dans ledit sens au moins,
- aménagés dans une partie de la virole qui présente un degré de flexibilité entre une position naturelle relâchée une position contrainte radialement vers l'extérieur dans laquelle ces moyens de blocage sont libres de tout engagement avec ledit élément complémentaire, ladite partie de la base et les moyens de blocage étant conformés et constitués de façon à ce que :
   - lorsque ladite enceinte est à la même pression que la pression atmosphérique prévalant hors de l'enceinte, les moyens de blocage sont engagés avec l'élément complémentaire pour que le pneumatique soit automatiquement bloqué dans ledit au moins un sens sur la jante,
   - la libération des moyens de blocage imposant de soumettre ceux-ci à l'action de moyens extérieurs agissant pour faire prendre auxdits moyens de blocage ladite position contrainte radialement vers l'extérieur.

Tout comme déjà exposé ci-dessus, les moyens de blocage peuvent être un élément de blocage prenant la forme d'une protubérance ou d'une rainure, aménagé sur la face radialement intérieure de la virole à une position axialement éloignée des sièges, ledit élément de blocage ayant une hauteur (H) prédéterminée mesurée parallèlement à un rayon à partir de la face intérieure de la virole, ladite portée complémentaire aménagée sur la jante étant adaptée audit élément de blocage. Les remarques faites ci-dessus à propos du degré de flexibilité s'appliquent également.

Par le choix des matériaux, le dessin et le dimensionnement de la virole, on peut très aisément lui conférer une flexibilité suffisante dans sa partie médiane, entre les sièges. Là encore et comparativement à la souplesse de la virole, la rigidité de la partie sommet doit être suffisante pour que la mise en dépression du pneumatique provoque une augmentation en diamètre de la partie médiane de la virole sans que la partie sommet s'effondre.

Dans toutes les familles, il faut noter que la jante utilisée n'est pas étanche, ou plus exactement que c'est le pneumatique lui même qui doit être étanche. L'étanchéité est assurée entre enveloppe de pneumatique et virole dans la première famille, et au niveau de la fermeture dans le cas de la deuxième famille (tore fendu). Autrement dit, l'air provenant de l'enceinte pneumatique et pouvant avoir abouti entre le pneumatique et la jante, doit pouvoir s'échapper afin d'éviter l'augmentation de pression entre jante et base de montage. Cette non étanchéité de la jante peut être obtenue par exemple parce que la matière constitutive est poreuse, ou parce qu'il existe de petits orifices d'éventation judicieusement disposés, ou parce qu'il existe des rainures correctement disposées et orientées à la surface radialement extérieure de la jante, ou encore parce qu'il existe des rainures correctement disposées et orientées à la surface radialement intérieure de la base de montage. On peut aussi utiliser d'autres artifices comme des drains textiles, ou un revêtement de surface drainant. De ce fait, l'efficacité de l'immobilisation n'évolue pas dans le temps.

Sous un autre aspect, l'invention propose de mettre en dépression la cavité interne d'un pneumatique pour faire augmenter en diamètre ou pour faciliter l'augmentation en diamètre d'une partie de la base de montage, ce qui permet d'enfiler facilement le pneumatique sur sa jante, l'immobilisation finale du pneumatique sur la jante étant réalisée en supprimant la dépression.

Ce montage par simple translation relative se fait sans préjudice de l'obtention d'une immobilisation à une position axiale rigoureusement déterminée. L'invention permet donc de concevoir et de réaliser une fixation sûre du pneumatique sur sa jante, tout en simplifiant largement le montage par rapport aux solutions connues qui font appel soit à une jante comportant un creux central de montage dont la profondeur minimale est dictée par la hauteur des crochets de jante, soit une jante en plusieurs pièces, soit une insertion préalable de la jante à l'intérieur des bourrelets avec rotation relative des plans de la jante et de l'enveloppe de pneumatique. Tant pour le montage du pneumatique sur la jante que le démontage de celui-ci, l'invention prévoit de mettre l'enceinte interne du pneumatique en dépression pendant le montage et pendant le démontage. En dehors de l'opération de montage et de démontage, l'invention propose une solution qui fait en sorte que, lorsque le pneumatique est à la pression atmosphérique, la retenue du pneumatique sur la jante soit aussi sûre et aussi positive qu'avec les solutions connues de l'état de la technique. En effet, à la pression atmosphérique ambiante, sans sollicitations exprès (une dépression par rapport à la pression atmosphérique ambiante n'existe pas naturellement), le pneumatique ne peut pas se démonter accidentellement alors que, dans le cas des enveloppes de pneumatique pour véhicule de tourisme et de leurs jantes à base creuse telles qu'elles sont normalisées à l'ETRTO à la date de priorité de la présente demande, en cas de dégonflement total, il n'est pas impossible que le ou les bourrelets s'engagent spontanément dans la gorge de montage puis passent par dessus le rebord de jante (phénomène connu sous le nom de déjantage).

L'invention s'étend ainsi à un procédé de montage sur une jante d'un pneumatique torique fermé formant une enceinte étanche, ledit pneumatique comportant :
- une base de montage sur une jante, ladite base formant manchon destiné à reposer sur ladite jante en position de montage,
- des moyens de blocage, pour immobiliser axialement dans l'un des deux sens au moins le pneumatique sur la jante, lesdits moyens de blocage étant :
   - aménagés sur la face radialement intérieure de la base,
   - destinés à coopérer avec une portée complémentaire aménagée sur la jante pour s'opposer à tout mouvement relatif entre pneumatique et jante axialement dans ledit sens au moins,
   - aménagés dans une partie de la base qui présente un degré de flexibilité entre une position de blocage et une position débloquée située radialement plus vers l'extérieur,
ledit procédé comportant les étapes suivantes :
- lorsque le pneumatique est dans une configuration de tore fermé définissant une enceinte étanche, mettre en dépression l'enceinte jusqu'à provoquer un déplacement des moyens de blocage vers les plus grands rayons d'une ampleur suffisante,
- enfiler ou achever d'enfiler ledit pneumatique sur ladite jante jusqu'à ce qu'il prenne sa position axiale finale par rapport à la jante,
- annuler la dépression de façon à ce que les moyens de blocage se déplacent vers les rayons plus petits.

L'invention concerne aussi un procédé de démontage hors d'une jante d'un pneumatique torique fermé formant une enceinte étanche, ledit pneumatique comportant :
- une base de montage sur une jante, ladite base formant manchon destiné à reposer sur ladite jante en position de montage,
- des moyens de blocage, pour immobiliser axialement dans l'un des deux sens au moins le pneumatique sur la jante, lesdits moyens de blocage étant :
   - aménagés sur la face radialement intérieure de la base.
   - destinés à coopérer avec une portée complémentaire aménagée sur la jante pour s'opposer à tout mouvement relatif entre pneumatique et jante axialement dans ledit sens au moins,
   - aménagés dans une partie de la base qui présente un degré de flexibilité entre une position de blocage et une position débloquée située radialement plus vers l'extérieur,
ledit procédé comportant les étapes suivantes :
- créer une pression plus grande entre jante et pneumatique que dans l'enceinte étanche jusqu'à provoquer un déplacement des moyens de blocage vers les plus grands rayons d'une ampleur suffisante,
- retirer ledit pneumatique de ladite jante en le faisant glisser axialement.

Dans une mise en oeuvre avantageuse du procédé de démontage, pour créer une pression plus grande entre jante et pneumatique que dans l'enceinte étanche, on met en dépression ladite enceinte étanche alors que le pneumatique baigne extérieurement dans la pression atmosphérique. En variante, pour obtenir une différence de pression de part et d'autre de la base de montage, au lieu d'abaisser la pression prévalant dans l'enceinte du pneumatique sous la pression atmosphérique, on peut aussi injecter un fluide sous pression entre la jante et la base de montage, idéalement à un endroit proche des moyens d'immobilisation, ce qui peut se faire par exemple par un orifice d'éventation prévu sur la jante comme expliqué ci-dessus. On peut aussi éventuellement solliciter mécaniquement lesdits moyens de blocage, c'est à dire les pousser radialement, en plus ou à la place d'un abaissement de la pression prévalant dans l'enceinte du pneumatique. Les procédés de montage et de démontage décrits ci-dessus proposent une étape au cours de laquelle le pneumatique torique glisse par simple mouvement axial relatif par rapport à la jante, sans requérir qu'un bourrelet d'une enveloppe de pneumatique ne soit engagé dans une gorge de montage ; ces procédés s'avèrent intéressants et ont des applications plus larges qu'en liaison avec un pneumatique selon l'invention, par exemple même dans le cas où pour que le pneumatique soit bien immobilisé axialement par rapport à la jante, il faut encore parfaire le blocage en créant un frettage ou en augmentant le frettage de la base sur la jante par gonflage de l'enceinte du pneumatique ; le fait de contraindre lesdits moyens de blocage radialement vers les plus grands rayons aide au mouvement axial relatif entre base et jante.

L'invention sera mieux comprise par la description qui va suivre, de plusieurs exemples donnés à titre non limitatif, en se référant au dessin annexé sur lequel on voit :
- à la figure 1, une première variante d'un ensemble pneumatique et jante correspondant à la première famille, représenté en position monté sur la jante ;
- aux figures 2 à 5, plus en détail, la virole utilisée dans cette première variante pour constituer la base de montage permettant de créer un pneumatique ;
- à la figure 6, le pneumatique de cette première variante en cours de montage sur la jante ;
- à la figure 7, une deuxième variante de réalisation d'un ensemble pneumatique et jante correspondant à la première famille ;
- à la figure 8, une vue plus détaillée de la virole utilisée dans cette deuxième variante ;
- à la figure 9, une vue de côté et partielle montrant la disposition d'un renforcement à l'intérieur de la même virole ;
- à la figure 10, la même virole en cours de montage dans l'enveloppe de pneumatique ;
- à la figure 11, une troisième variante de réalisation appartenant à la deuxième famille.
- à la figure 12, la même troisième variante de réalisation, le pneumatique étant en cours de montage ou de démontage sur une jante ;
- à la figure 13, un détail du pneumatique de la troisième variante ;
- à la figure 14, une autre exécution de la troisième variante ;
- à la figure 15, une quatrième variante de réalisation appartenant à la deuxième famille,
- à la figure 16, la même quatrième variante de réalisation, le pneumatique étant en cours de montage ou de démontage ;
- à la figure 17, une vue d'une entretoise utilisée dans une cinquième variante ;
- à la figure 18, une vue partielle de la cinquième variante en position de montage sur la jante ;
- à la figure 19, une sixième variante de réalisation appartenant à la troisième famille, en position monté sur la jante ;
- à la figure 20, une septième variante de réalisation appartenant à la troisième famille, en position monté sur la jante ;
- à la figure 21, la septième variante de réalisation, le pneumatique étant en cours de montage sur une jante,
- à la figure 22, une huitième variante de réalisation, dans laquelle le pneumatique est celui de la première variante, et la jante est différente,
- à la figure 23, le pneumatique de cette huitième variante de réalisation, en cours de montage sur la jante.

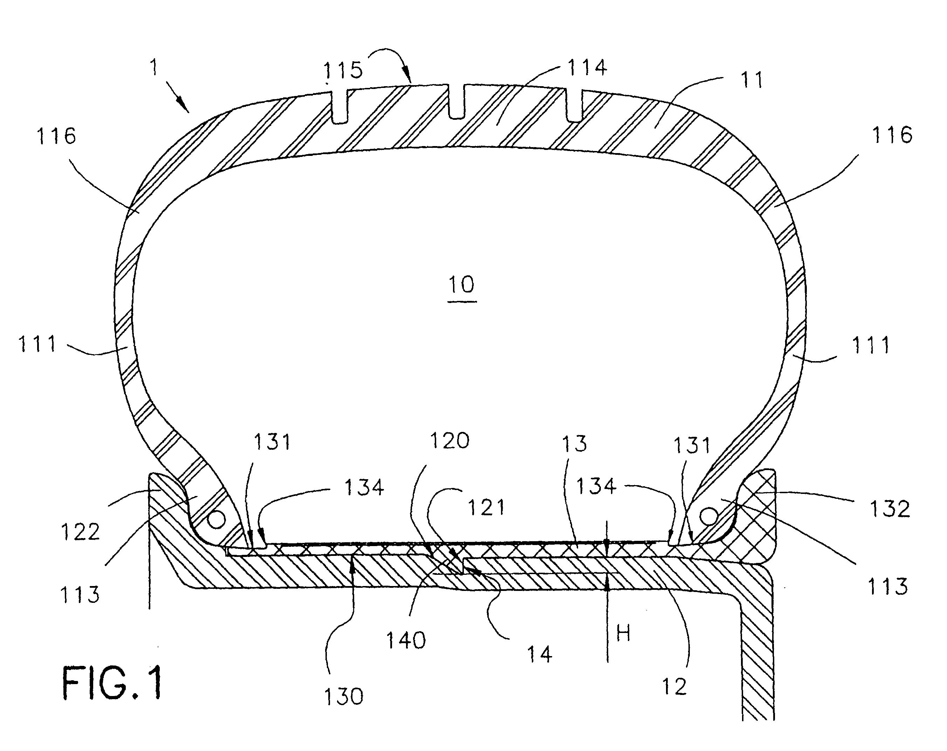

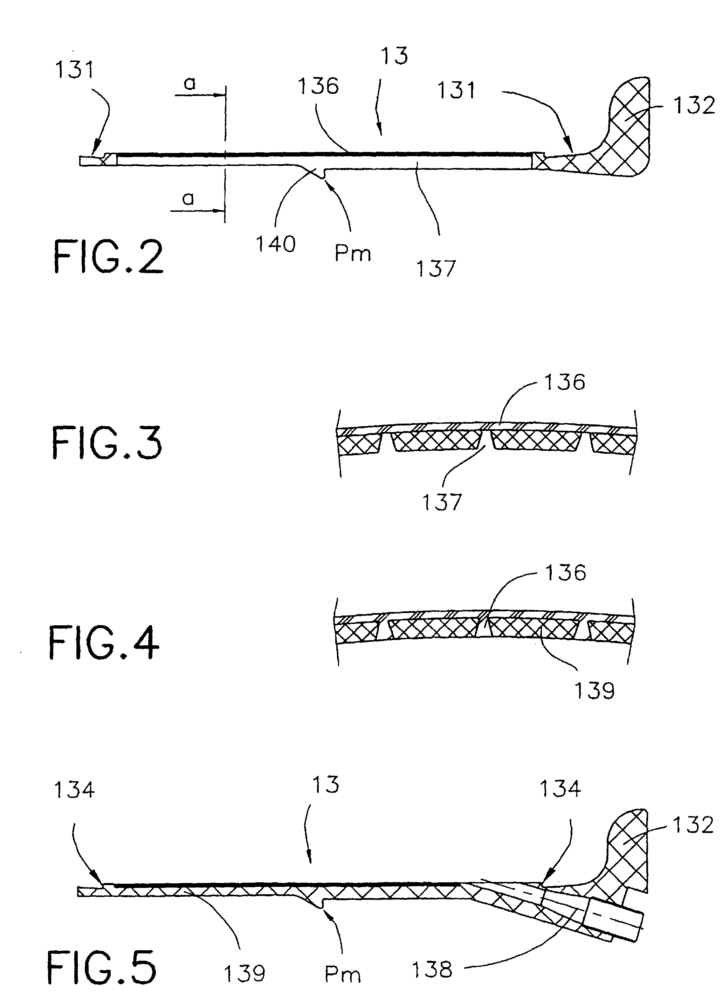

A la figure 1, on voit une enveloppe de pneumatique 11 comportant deux flancs 111 reliés à leur extrémité radialement supérieure 116 à une partie sommet 114. La partie sommet 114 comporte une bande de roulement 115. Chacun des flancs 111 se termine à son extrémité radialement intérieure par un bourrelet 113. On voit une virole 13 permettant de relier les bourrelets 113 pour constituer une cavité interne étanche 10 typique d'un pneumatique 1. Cette virole constitue ici une base de montage. Elle est ici sensiblement cylindrique. Cette virole 13 comporte deux sièges 131 sur lesquels on peut monter chacun des bourrelets 113. Chacun des sièges 131 se termine axialement vers l'intérieur par un épaulement 134 comparable aux humps des jantes classiques pour montage sans chambre à air. La virole 13 comporte un seul rebord 132, comparable à un rebord de jante tel que connu dans l'état actuel de la technique. Puisqu'elle ne comporte qu'un seul rebord 132, la virole 13 peut être insérée à l'intérieur et sous les bourrelets 113 de l'enveloppe de pneumatique 11 par simple translation relative (axes de la virole et de l'enveloppe de pneumatique confondus), sans devoir lui imposer de grandes déformations. La virole 13 comporte un logement 138 pour une valve (voir figure 5) permettant de mettre la cavité interne 10 sous pression ou bien sous dépression.

Notons au passage que, si la valve utilisée est capable de maintenir l'étanchéité même lorsque l'enceinte interne est en dépression, cela permet, après avoir atteint le niveau de dépression souhaité, de déconnecter le pneumatique de la source de dépression pendant les manipulations de montage sur la jante. Cela constitue une exigence nouvelle du cahier des charges par rapport aux réalisations usuelles. Il se trouve que, aux faibles niveaux de dépressions suffisants pour le bon fonctionnement de l'invention, le ressort du clapet d'une valve standard pour pneumatiques de tourisme peut suffire.

Selon l'invention, la virole 13 peut être immobilisée sur la jante par un élément de blocage qui comporte latéralement au moins une portée de blocage sensiblement plane. Dans cette variante de réalisation, sur sa face radialement intérieure 130, la virole 13 comporte une protubérance 140. Sur l'un des côtés de cette protubérance 140, on voit une portée de blocage 14, circonférentiellement sensiblement continue, ici orientée sensiblement dans un plan perpendiculaire à l'axe de la virole 13.

La hauteur dans la direction radiale de cette portée 14 vaut H. L'utilisation d'une rainure sur la face radialement intérieure 130 de la virole offrirait une solution équivalente d'un point de vue de l'immobilisation relative entre pneumatique et jante. Cependant, la protubérance est plus indiquée dans le cas où la jante est cylindrique (non étagée, non tronconique), la solution alternative étant plutôt à envisager si le diamètre sous la virole du côté opposé au côté par lequel on enfile le pneumatique est dessiné à une valeur supérieure ou égale au diamètre extérieur de la protubérance correspondante alors prévue sur la jante.

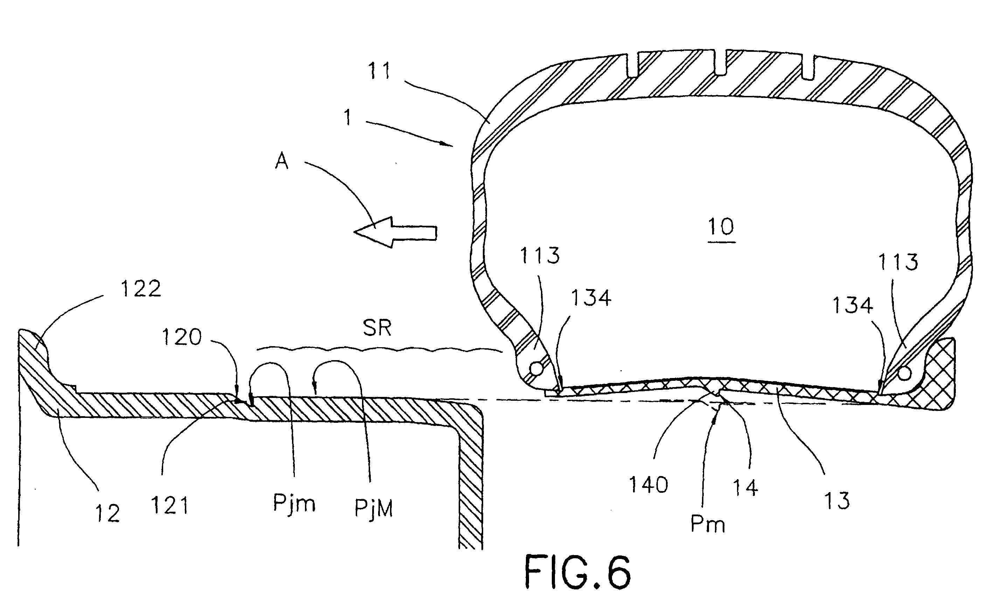

On a indiqué dans l'exposé général de l'invention que le montage du pneumatique sur sa jante et la tenue en position fait appel à une technique d'enclipsage. Une dépression crée dans la cavité interne 10 du pneumatique permet de rendre inopérants les moyens d'enclipsage lors du montage ou du démontage du pneumatique sur ou hors de sa jante. Cette dépression permet une dilatation radiale de la base de montage supportant l'élément de blocage (ici la protubérance 140). On comprend donc que la conception de la base de montage (ici la virole 13) doit permettre la dilatation radiale requise. Comme on peut le voir à la figure 6, lorsque l'enveloppe de pneumatique est soumise à l'effet d'une dépression régnant dans l'enceinte 10, la portée 14 sur la protubérance 140 s'est écartée radialement d'une valeur suffisante pour que le point le plus bas de celle-ci soit sur un cercle de rayon suffisant pour permettre de déplacer latéralement le pneumatique et de l'enfiler sur la jante avec un léger jeu permettant un montage aisé.

On voit plus spécialement aux figures 2 à 5 comment la virole est réalisée pour permettre l'extensibilité en diamètre requise. La virole est réalisée pour l'essentiel en matière plastique à relativement haut module. Pour conférer l'extensibilité radiale requise, la partie médiane, située entre les sièges 131, comporte des fentes 137 orientées sensiblement axialement. Ainsi, la dilatation radiale de la partie médiane n'est contrariée que par la résistance à la flexion des lames 139 ainsi définies entre les fentes 137. Notons que le plan de coupe, radial, de la figure 2 passe par une fente 137, alors que le plan de coupe, radial, de la figure 5 passe par une lame 139. Les fentes 137 sont obturées par une matière 136 à très faible module d'élasticité afin de rendre l'enceinte 10 étanche. Les figures 3 et 4 sont des vues selon "aa" à la figure 2 de deux alternatives possibles pour disposer la matière 136. Ou bien la matière 136 forme seulement une peau sur toute la surface radialement extérieure de la virole 13 (figure 3), ou bien les fentes 137 sont comblées par ladite matière 136. Par exemple, cette matière 136 est un caoutchouc butyl. Dans tous les cas, la matière est choisie pour ne pas s'opposer à une augmentation du diamètre de la partie médiane de la virole 13.

L'élément de blocage sur la virole (ici plus particulièrement la protubérance 140), axialement distant des flancs, présente à l'état libre de toute contrainte un périmètre minimal (Pm) que l'on mesure sous la protubérance 140 (l'état libre de toute contrainte est représenté en traits interrompus en ne montrant que la protubérance et son environnement direct, dans la partie droite de la figure). Par ailleurs, comme on le voit aux figures 1 et 6, la jante 12 comporte une zone de support, située dans la projection radiale de la base, constituée ici essentiellement par la virole 13. La zone de support présente un périmètre minimal (Pjm), qui est en regard de la partie de la base concourant au blocage, lorsque l'on considère le pneumatique en position de montage sur la jante. Axialement d'un côté (SR) au moins de la partie présentant le périmètre minimal (Pjm) -voir figure 6-, la jante 12 présente une zone présentant un périmètre maximal (PjM) plus grand que (Pjm), et la totalité de la jante située du même côté présente en toute position axiale un périmètre inférieur à (PjM). Autrement dit, la jante est dépourvue de rebord de jante (au sens classique d'un rebord s'étendant radialement vers les plus grands diamètres) du côté SR. Ledit périmètre minimal (Pm) de l'élément de blocage sur le pneumatique est inférieur au périmètre maximal (PjM) de jante. Ledit élément de blocage et ladite base autour dudit élément de blocage étant extensibles élastiquement sous l'action d'une dépression dans ladite enceinte étanche du pneumatique, comme on le voit bien à la figure 6. De préférence, ledit périmètre minimal (Pm) de la base au niveau de l'élément de blocage (sur le pneumatique) est inférieur ou égal au périmètre minimal (Pjm) de jante.

Suivant l'enseignement de la présente invention, après avoir inséré la virole 13 sous les bourrelets 113, on met la cavité interne 10 en légère dépression, ce qui suppose que l'on réalise un contact étanche de l'enveloppe de pneumatique sur la virole. Le dimensionnement des éléments est tel qu'une étanchéité suffisante est assurée. Cette dépression (on enlève de 0,1 à 0,2 bar pour atteindre une pression absolue de l'ordre de 0,80 à 0,90 bars) permet dans un premier temps de maintenir l'enveloppe de pneumatique 11 en contact intime avec la virole 13, chacun des bourrelets 113 étant retenu sur son siège 131 par un frottement suffisant et/ou par un petit épaulement tel que 134. La même dépression est suffisante pour que la virole conçue comme indiqué ci-dessus se déforme de manière convenable, sans que le pneumatique se déforme de façon gênante. Le pneumatique se déformerait de façon gênante si, ne fusse que de façon localisée, il empêchait ladite virole de grandir en diamètre. Une telle valeur de dépression est facilement atteinte par la plupart des aspirateurs ménagers. On peut également prévoir de livrer les pneumatiques au négociant ou à l'utilisateur final alors que le niveau convenable de dépression règne dans leur enceinte 10, à condition de respecter certaines valeurs de température ambiante. Notons que, valve fermée et enceinte à pression nulle, un abaissement important de la température ambiante, de l'ordre de 30°C, permet de créer une dépression de l'ordre de 0.1 bar. Donc refroidir suffisamment le pneumatique après avoir fermé la valve lorsqu'il est à pression relative nulle pourrait permettre dans certains cas de créer une dépression suffisante.

Ensuite, tout en maintenant les axes de la jante 12 et de la base de montage (ici la virole 13) du pneumatique sensiblement confondus, on enfile le pneumatique 1 sur la jante 12 par une translation schématisée par la flèche A. Compte tenu du poids limité d'un pneumatique pour véhicule de tourisme, cela peut se faire à la main d'une façon aisée.

La base de montage est de préférence conçue de façon à ce qu'il n'existe pas de serrage sous le siège du bourrelet entre virole et jante, ou bien à tout le moins un serrage facilement réversible à pression nulle (c'est à dire à la pression atmosphérique) dans l'enceinte pneumatique, afin de permettre un positionnement facile lors du montage et un démontage simple, par simple translation relative entre jante et pneumatique. Notons que la simple translation relative évoquée ici n'exclut pas quelques mouvements de recentrage pour maintenir les frottements entre pneumatique et jante aussi faibles que possible pendant l'opération.

On voit à la figure 1 que la jante 12 comporte un seul rebord 122. Après translation relative, lorsque le bourrelet 113 de gauche à la figure 6 est arrivé en butée contre le rebord 122 de la jante 12 (c'est à dire lorsqu'on se trouve dans la configuration de la figure 1), le pneumatique est en place finale sur la jante et on peut annuler la dépression dans l'enceinte étanche de celui-ci. La protubérance 140 s'engage alors dans la rainure 120, ce qui permet l'enclipsage du pneumatique sur la jante comme on le voit à la figure 1. Une variante du procédé de montage prévoit que, lorsque l'on a commencé à enfiler le pneumatique et avant que le pneumatique prenne sa position axiale finale par rapport à la jante, on diminue la dépression de sorte que les moyens d'immobilisation coopèrent avec la jante avant de prendre sa place finale face à ladite portée complémentaire. Appliqué à la première variante, la protubérance 140 va frotter à la surface de la jante du côté SR, et ainsi entrer immédiatement dans la rainure 120 dès que c'est possible. L'encliquetage est ainsi immédiat dès que le pneumatique est en butée contre le rebord 122.

L'élément de blocage coopère ainsi avec la jante pour s'opposer à tout mouvement relatif du pneumatique par rapport à la jante au moins axialement vers le côté (SR). Dans cette variante, le pneumatique comporte une portée de blocage 140 et la jante une portée complémentaire 121 orientées sensiblement dans un plan perpendiculaire à l'axe. Lors de l'enclipsage, la protubérance 140 pénètre dans la rainure 120. L'appui de la portée de blocage 14 contre la portée complémentaire 121 sur la jante s'oppose à un mouvement du pneumatique dans le sens inverse à la flèche A. En raison de la construction de la virole 13, la position de repos est telle que la protubérance 140 reste engagée dans la rainure 120 ce qui rend impossible le démontage du pneumatique par rapport à la jante en dehors d'une mise en dépression de l'enceinte pneumatique 10. L'immobilisation du pneumatique 11 sur sa jante 12 est ainsi suffisamment positive, au moins tout autant positive que dans les solutions connues de l'état actuel de la technique car, la dépression est quasi impossible à obtenir de manière accidentelle. Dans cette position, la tenue du pneumatique sur la jante 12 est comparable à la tenue d'une enveloppe de pneumatique (répondant aux normes ETRTO en vigueur à ce jour) sur une jante (répondant aux normes ETRTO en vigueur à ce jour) lorsque la cavité interne de l'enveloppe pneumatique est à la pression atmosphérique.

Lorsque l'on gonfle un tel pneumatique, les bourrelets 113 ont tendance à s'écarter axialement l'un par rapport à l'autre. L'écartement des bourrelets est empêché par le crochet 122 de la jante 12 et le rebord 132, lequel est retenu par la portée 14 qui vient en butée contre la portée complémentaire 121 et par le frottement entre base et jante.

Pour démonter le pneumatique hors de sa jante 12, on procède de la façon suivante. On annule d'abord la pression de gonflage à l'intérieur de l'enceinte pneumatique 10. Puis, on crée une dépression suffisante à l'intérieur de l'enceinte pneumatique 10 afin de dégager la protubérance 140 hors de la rainure 120. On termine en faisant glisser axialement le pneumatique par rapport à la jante jusqu'à sortir complètement la virole hors de la jante.

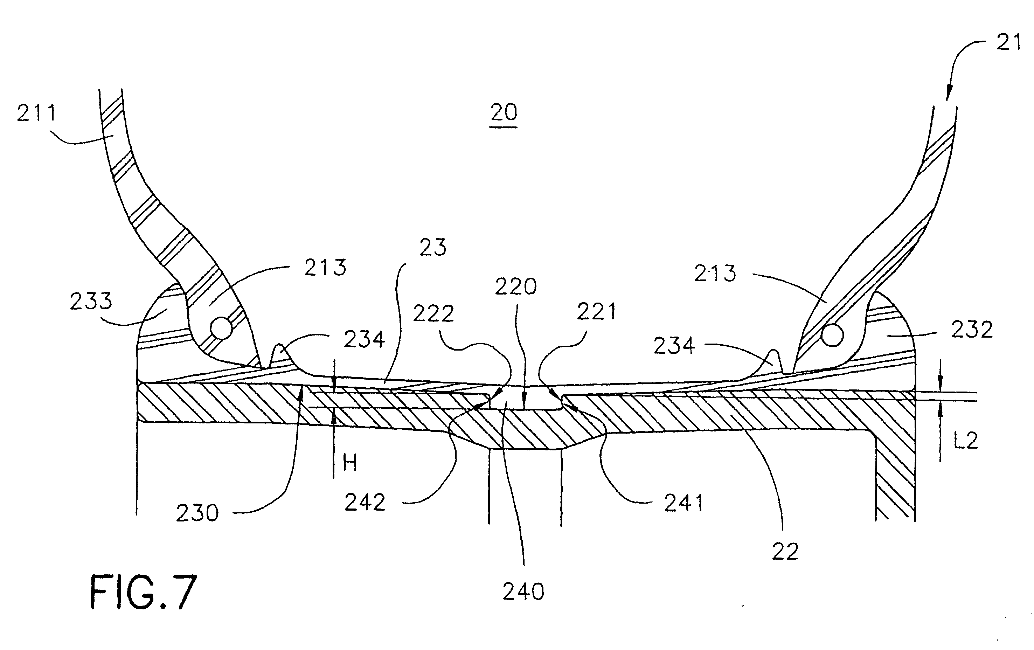

Dans d'autres réalisations (figures 7 à 18), le pneumatique comprend deux portées sensiblement continues circonférentiellement et orientées sensiblement radialement et formant des faces orientées axialement de façon opposée l'une par rapport à l'autre, lesdites portées étant destinées à coopérer chacune avec une portée complémentaire aménagée sur la jante pour immobiliser axialement le pneumatique par rapport à la jante dans les deux directions axiales.

Les figures 7 à 10 montrent une seconde variante de réalisation de la première famille. On voit une enveloppe de pneumatique 21 comportant deux bourrelets 213, et une jante 22 dépourvue de tout rebord. La jante comporte une rainure 220 aménagée sensiblement au milieu de celle-ci, continue circonférentiellement. On voit deux portées complémentaires 221 et 222 de part et d'autre de la rainure 220. La surface radialement extérieure de la jante 22, de part et d'autre de la rainure 220, présente des parties légèrement tronconiques (voir différence de rayons L2 à la figure 7), la zone de plus grand diamètre se trouvant axialement à l'extérieur de chaque côté de la jante.

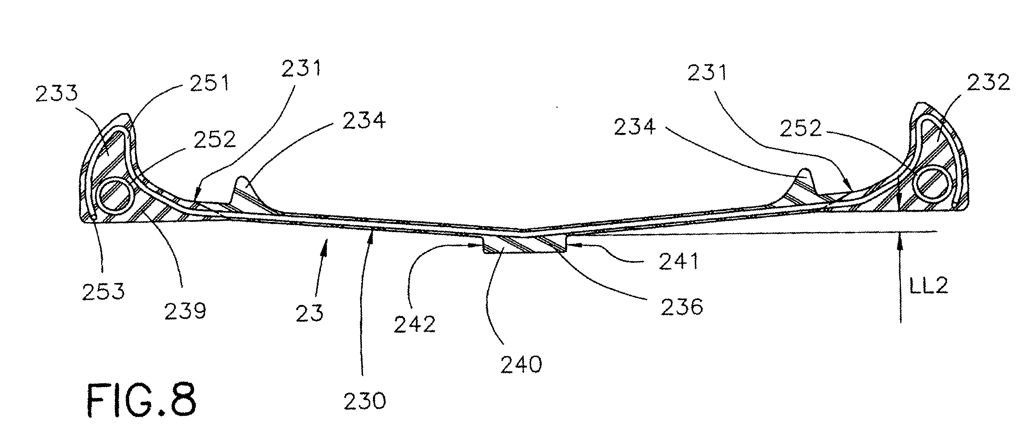

On voit une virole 23 symétrique. La virole 23 comporte une protubérance 240 et, de part et d'autre de celle-ci, des portées d'appui circonférentiellement continues 241 et 242. La virole 23 comporte deux rebords extérieurs 232 et 233 et deux rebords intérieurs 234. Dans cette variante, comme cela apparaît mieux aux figures 8 à 10, la virole 23 est réalisée en caoutchouc 239 armé de fils métalliques de renforcement 251, disposés radialement. La surface radialement intérieure 230 de la virole 23, de part et d'autre de la protubérance 240, présente des parties légèrement tronconiques (voir différence de rayons LL2 à la figure 8), la zone de plus grand diamètre se trouvant axialement à l'extérieur de chaque côté de la jante.

Evoquons ici un autre aspect de l'invention. Les moyens de blocage, comme déjà annoncé, ne sont pas nécessairement localisés, contrairement à ce qui apparaît dans les exemples ci-dessus. Lesdits moyens de blocage peuvent être constitués par la partie médiane de la base qui forme une ceinture élastique radialement et répartie axialement, ladite portée complémentaire aménagée sur la jante étant adaptée à ladite ceinture élastique. Pour illustrer cette variation dans la conception, considérons que la valeur de la cote LL2 est assez sensiblement supérieure à la valeur de la cote L2 (on a schématisé à la figure 8 une valeur de LL2 plus grande que la valeur de L2 à la figure 7). Après montage de la virole 23, il va en résulter un effet de frettage réparti sur la plus grande partie de la largeur comprise entre les bourrelets 213. La force de frettage dépend bien entendu des dimensions considérées et des modules des matériaux utilisés pour constituer la virole 23. Cet effet de frettage pourrait permettre de ce passer de la protubérance 240.

Bien entendu, un effet de frettage est aussi utile pour renforcer un blocage par enclipsage. L'invention offre de nombreuses possibilités de concevoir le blocage d'un pneumatique sur une jante et aussi plusieurs variantes pour assurer le montage et le démontage. L'attention du lecteur est attirée sur le fait que beaucoup parmi les caractéristiques de produit ou de procédé décrites peuvent être utilisées indépendamment les unes des autres. Par exemple, ce qui a été dit à propos du degré de flexibilité concerne aussi le blocage par ou avec le concours d'un effet de frettage ; la base de montage peut ou non former une seule pièce avec le pneumatique ; dans le cas d'une virole séparée, elle peut bien entendu être en matière plastique, comporter des fentes 137 obturées par une matière 136 à très faible module d'élasticité, et se monter comme indiqué, etc.

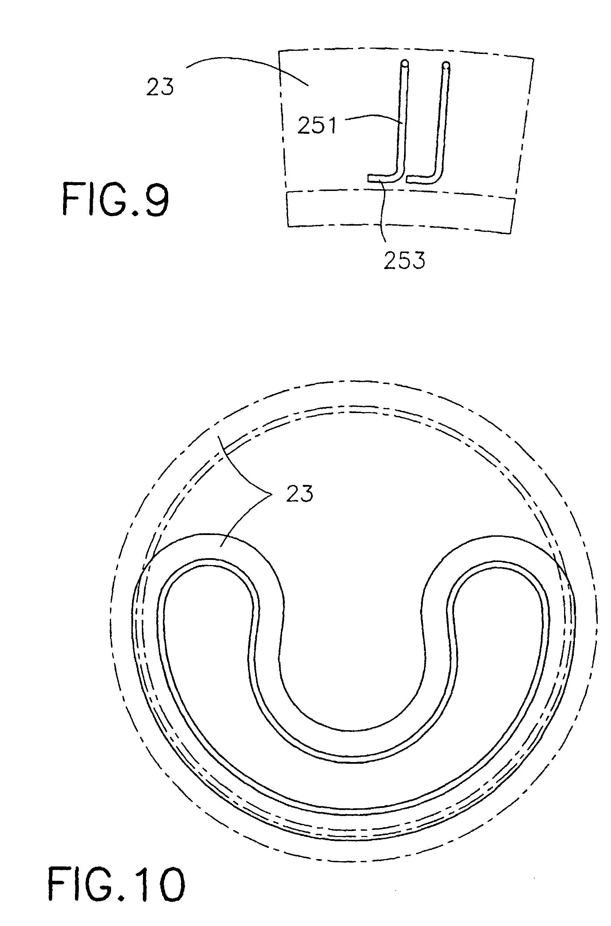

Revenons à la virole 23. Les rebords extérieurs 232, 233 sont aussi renforcés par des ressorts en spirale 252. Dans chaque rebord, les fils métalliques de renforcement 251 sont recourbés à leurs extrémités 253 comme montré à la figure 9 afin que les fils 251, par les sollicitations de service, ne risquent pas de percer la matrice en caoutchouc qu'ils renforcent. La matrice de caoutchouc n'est pas nécessairement homogène, les propriétés du caoutchouc optimal pouvant varier selon les différentes parties de la virole 23. La structure réalisée doit autoriser l'expansion diamétrale de l'élément de blocage, et doit pouvoir être courbée en haricot (figure 10) pour être insérée sous les bourrelets d'une enveloppe de pneumatique 21.

Les opérations de montage et de démontage d'un pneumatique font appel à la même étape de mise en dépression de l'enceinte 20 comme expliquée ci-dessus. Cette variante diffère en ce que, lorsque l'on enfile le pneumatique sur la jante, il n'existe pas de butée axiale puisqu'il n'existe pas de rebord faisant partie de la jante 22. Lorsque l'on supprime la dépression après avoir enfilé le pneumatique sur sa jante, il convient de bien veiller à l'enclipsage de la protubérance 240 dans la rainure 220 au besoin en procédant à quelques tâtonnements. En variante, on aménage sur la jante un petit rebord dont le but est d'assurer un prépositionnement plus simple du pneumatique sur la jante, sans que ce rebord joue de rôle de retenue des bourrelets sous l'effet de la pression de gonflage du pneumatique. Ou bien, tout comme décrit pour la première variante, la suppression ou la diminution de la dépression dès que la protubérance 240 chevauche la jante 22 et avant qu'elle ne chevauche la rainure 220, permet à l'enclipsage d'intervenir automatiquement dès que la position correcte est atteinte. Là encore et tout comme dans les autres variantes, il est possible moyennant un dimensionnement adapté de la base de montage qu'un déplacement supérieur à la hauteur (H) de la rainure 220 soit obtenu avec une dépression dans l'enceinte inférieure à 0.2 bar.

Dans les première et deuxième variantes, le pneumatique est constitué essentiellement d'une enveloppe de pneumatique et d'une virole séparable de l'enveloppe de pneumatique, la virole constituant la base de montage, ladite enveloppe de pneumatique étant constituée essentiellement de deux flancs et d'une partie sommet, dans laquelle chaque flanc se termine radialement vers l'intérieur par un bourrelet, ladite virole constituant la base de montage, ladite virole étant rapportée sous et reliant les bourrelets. De la sorte, la base de montage, après insertion et montage sous les bourrelets, forme un manchon unique reliant les flancs et définissant avec l'enveloppe de pneumatique un tore fermé comportant une enceinte étanche.

Dans les exemples suivants (deuxième et troisième famille), la base de montage est moulée d'une seule pièce avec le pneumatique. Dans la deuxième famille, le pneumatique forme un tore fendu au niveau de la base de montage. De la sorte, la base de montage comporte deux demi-manchons reliés et moulés intégralement chacun avec l'un des flancs.

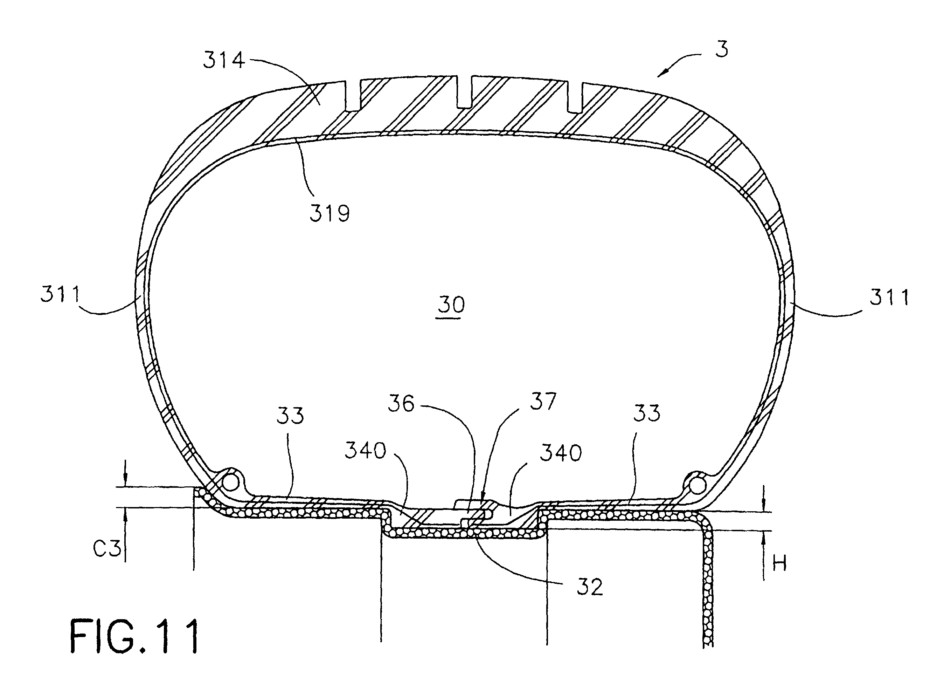

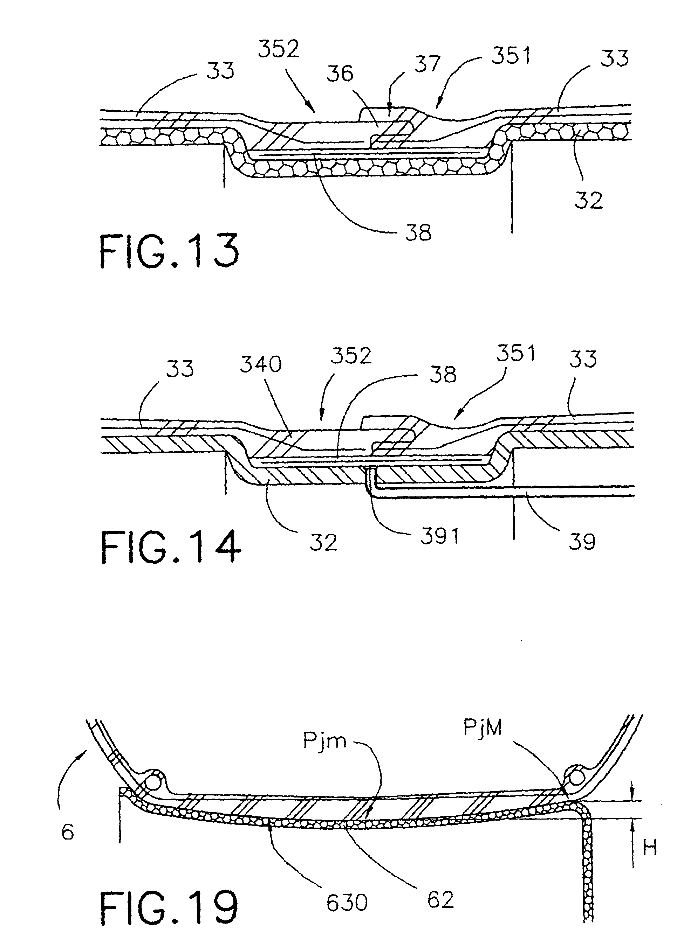

On voit aux figures 11 à 15 un pneumatique 3 ayant deux flancs 311 et deux demi-manchons 33 se terminant par des extrémités de formes complémentaires, à emboîtement possible. On voit qu'il comporte un renforcement de carcasse 319 allant d'une extrémité à l'autre. L'une des extrémités comporte une languette 36. L'autre extrémité comporte une gorge 37 à faces latérales parallèles. Une fois la languette insérée dans la gorge, lesdites extrémités forment une protubérance 340 qui s'insère dans une rainure 320 correspondante d'une jante 32. On retrouve ainsi l'élément de blocage de hauteur H, similaire aux variantes de la première famille. On assemble les extrémités complémentaires en appuyant sur les épaulements formés par chaque moitié de la protubérance 340. La figure 13 montre que l'on peut améliorer étanchéité de la liaison entre les demi-manchons 33 en appliquant, par exemple par collage, un ruban 38 d'étanchéité, armé ou non, chevauchant l'emboîtement, et/ou en introduisant entre languette 36 et gorge 37 un produit étanchéité comme un mastic. Le collage choisi est réversible si l'on souhaite pouvoir accéder à l'intérieur du pneumatique pour des réparations. Le pneumatique comporte bien entendu une valve (non représentée), par exemple disposée dans le demi-manchon 33 de droite, passant sous la tringle du bourrelet 313. Elle peut former une bosse localement (dans le sens périphérique), engagée dans un évidement ad hoc de la jante, et peut contribuer ainsi à s'opposer à la rotation du pneumatique sur la jante. L'évidement peut être traversant, notamment pour pouvoir enfiler depuis l'extérieur le pneumatique intérieur des montes jumelées. Le bossage sur le pneumatique peut aussi être traversant (orienté parallèlement à l'axe), même si ce n'est pas nécessaire pour l'implantation de la valve.

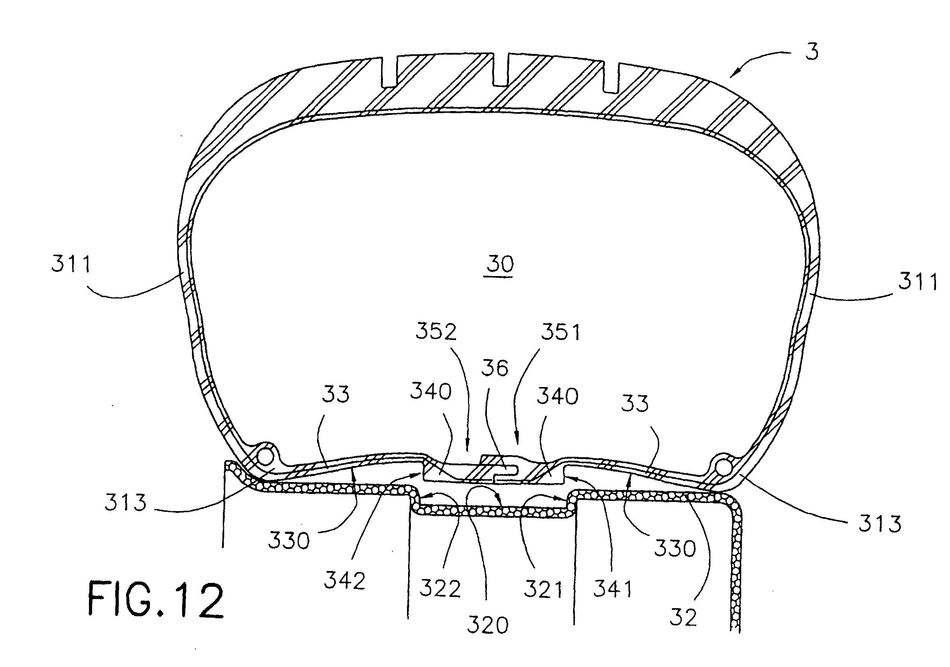

Le montage et le démontage du pneumatique sont similaires à ce qui a été expliqué ci-dessus. La figure 12 montre le pneumatique lorsque l'enceinte 30 est en dépression. La languette 36 est engagée en butée dans la gorge 37. De la sorte, les portées latérales 341 et 342 de la protubérance 340 sont légèrement plus rapprochée que l'écart existant entre les portées complémentaires 321 et 322 de part et d'autre de la rainure 320 sur la jante 32. Notons que le prépositionnement peut être facilité par l'existence optionnelle d'un rebord de jante de hauteur C3 (voir figure 11), qui pourrait aussi être utilisé dans la deuxième variante. Après suppression de la dépression, la face radialement intérieure 330 de la base de montage ainsi que la protubérance 340 de blocage s'appliquent fermement sur la jante 32.

En variante, la figure 14 montre qu'une canalisation 39 aboutit à un orifice 391 située à la surface radialement extérieure de jante, juste sous le ruban 38 disposé sous la protubérance 340. Cela permet, pour obtenir une différence de pression de part et d'autre de la base de montage, au lieu d'abaisser la pression prévalant dans l'enceinte du pneumatique sous la pression atmosphérique, d'injecter un fluide sous pression entre la jante et la base de montage. Le même orifice 391, en service normal, sert à éventer l'espace confiné entre la base de montage et la jante. Bien entendu, ce principe de démontage peut aussi être utilisé avec les autres variantes de l'invention.

La base de montage est de préférence conçue de façon à ce qu'il n'existe pas de serrage sous le bourrelet 313, contre la jante, ou bien à tout le moins un serrage facilement réversible à pression nulle (c'est à dire à la pression atmosphérique) dans l'enceinte pneumatique, afin de permettre un positionnement facile lors du montage et un démontage simple, par simple translation relative entre jante et pneumatique. La même remarque s'applique aux autres variantes ; faciliter le montage par translation relative comme expliqué conduit à ne pas prévoir de serrage sur la jante, au moins pendant la phase de montage. Remarquons que la transmission du couple entre pneumatique et jante se fait cependant dans de bonnes conditions grâce à la grande surface de contact existant entre pneumatique et jante, sur la plus grande part de la base de montage qui, puisqu'elle est suffisamment flexible pour se dilater radialement comme expliqué, transmet par voie de conséquence très bien à la jante la poussée due à pression de gonflage. Le pneumatique étant gonflé à la pression de service, il apparaît donc une grande pression de contact entre la base de montage et la jante.

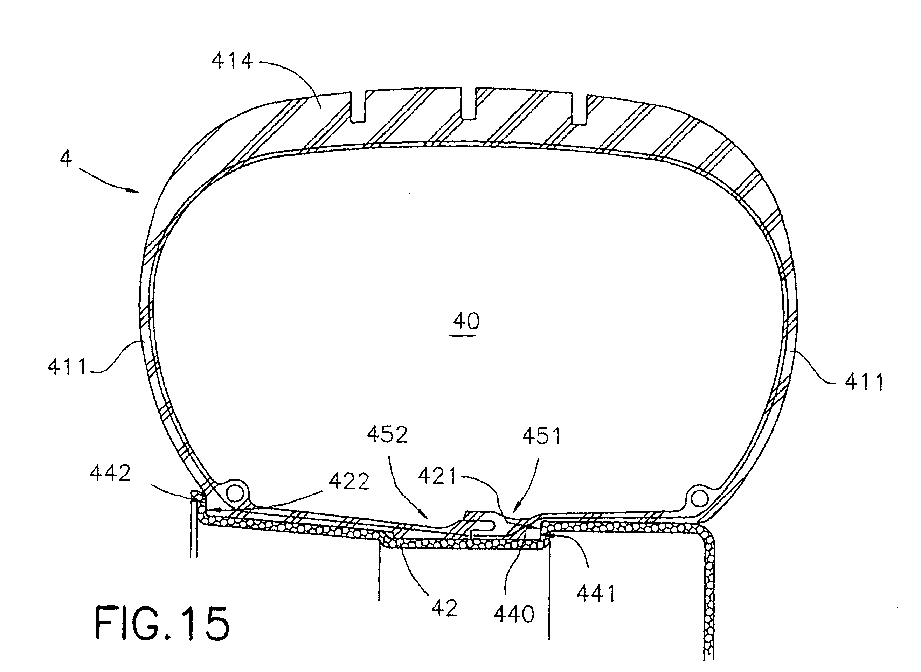

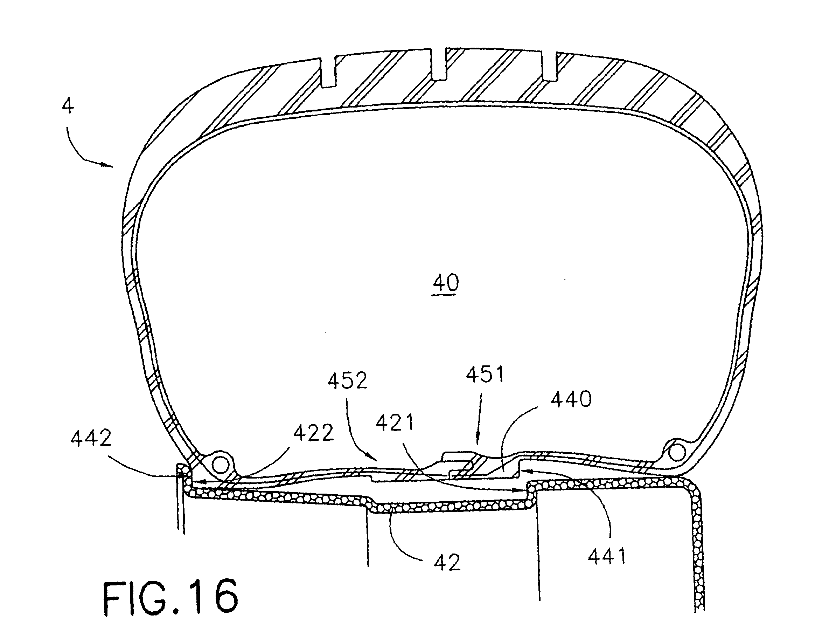

La quatrième variante illustrée aux figures 15 et 16 diffère de la troisième par l'écartement relatif des portées 441 et 442. Dans ce cas, on utilise une jante 42 qui comporte nécessairement un rebord 422 jouant le rôle classique de positionnement axial du bourrelet 413 de gauche. Le plus grand écartement relatif entre les portées 441 et 442 fait que, lors de la mise en dépression de l'enceinte 40, le rapprochement relatif entre les portées 441 et 442 ne se fait pas par mouvements au niveau de la jonction, mais principalement par diminution de la longueur du manchon entre lesdites portées 441 et 442. Cela permet de créer plus facilement un jeu qui peut être plus grand entre la portée 441 et une portée complémentaire 421 sur la jante. Cela facilite la mise en place du blocage et autorise des tolérances de fabrication plus larges sur le pneumatique et sur la jante. En dehors de cela, la constitution du pneumatique 4, le montage et le démontage sur et hors de la jante 42 sont comparables.

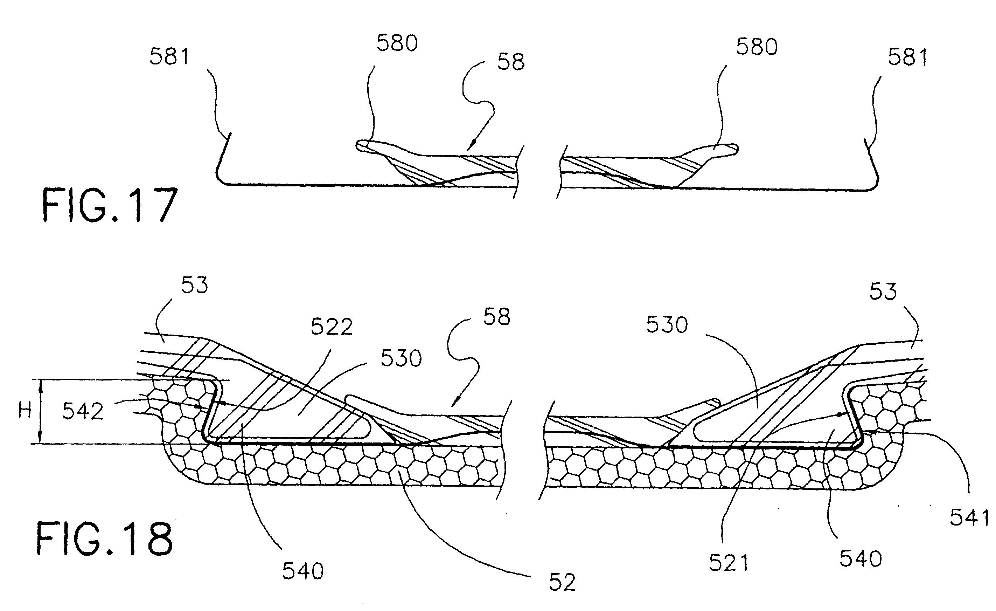

La cinquième variante, illustrée aux figures 17 et 18, comporte des demi-manchons 53 d'extrémités 530 de forme identique. On retrouve les protubérances 540 de hauteur H, les portées de blocage 541 et 542, ainsi que les portées complémentaires 521, 522 de part et d'autre d'une rainure 520 aménagée sur la jante 52. Un élément formant entretoise 58 est inséré entre lesdites extrémités 530 pour fermer l'enceinte et assurer étanchéité. A la figure 17, une section radiale de l'entretoise 58 montre qu'elle est constituée essentiellement par une partie centrale moulée en caoutchouc, dans laquelle sont noyées un certain nombre de bandes par exemple en matière plastique rigide ou en métal, disposées essentiellement parallèlement à l'axe de rotation, et qui dépassent latéralement de part et d'autre pour former des pattes 581 d'accrochage. Cette entretoise 58 comporte des lèvres 580 destinées à appuyer latéralement et radialement vers l'axe de rotation sur les extrémités 530 des demi-manchons 53, alors que les pattes 581 sont destinées à être insérées radialement sous les extrémités 530 des demi-manchons, allant par exemple jusque contre les portées d'appui 541 et 542. Les pattes 581 permettent de prépositionner correctement l'entretoise 58 sur les demi-manchons 53, tout en assurant l'étanchéité suffisante à la fois lors de la mise en dépression de l'enceinte interne du pneumatique et lors du gonflage du pneumatique.

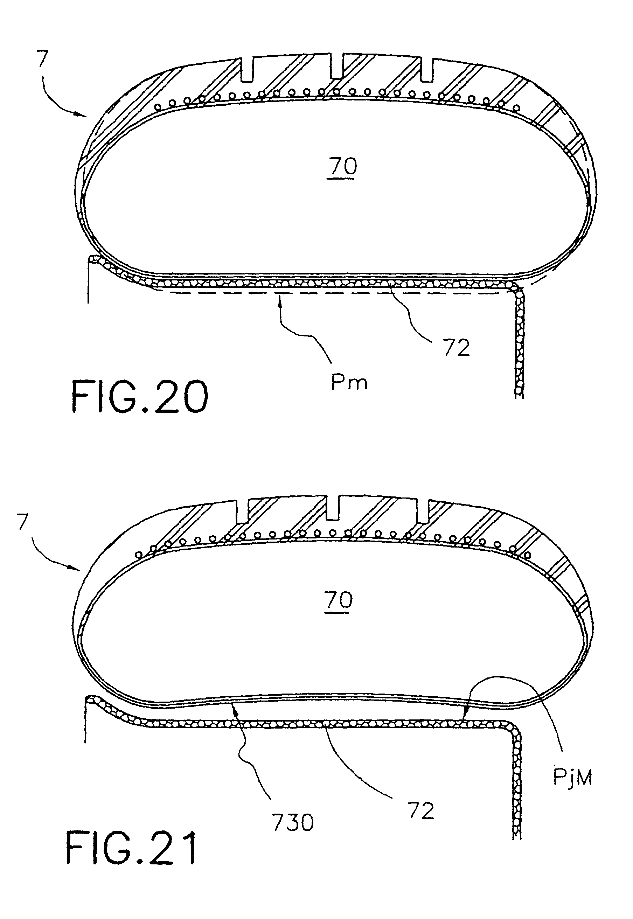

Les sixième et septième variantes ci-dessous (troisième famille, figures 19 à 21) montrent des pneumatiques toriques fermés 6 et 7, formant, de fabrication, une cavité interne 60 ou 70 étanche. La base de montage forme un manchon unique reliant les flancs et moulé intégralement avec ceux-ci. On peut prévoir un élément de blocage sous la forme d'une protubérance ou d'une rainure localisée. Cette application de l'invention ne nécessite pas de plus amples commentaires. Le lecteur est renvoyé à la description des variantes précédentes, car après fermeture par mise en contact des demi-manchons, on a dans les variantes de la seconde famille crée un tore fermé.

La figure 19 montre une variante où le moyen de blocage est une surépaisseur progressive, répartie tout le long de la base de montage. La hauteur H représente la différence de rayon entre l'endroit de plus petit périmètre Pjm sur la jante et l'endroit de plus grand périmètre PjM. Le montage et le démontage se font comme expliqué ci-dessus.

Les figures 20 et 21 montrent un pneumatique 7 dans lequel le périmètre Pm minimal du pneumatique 7, en dehors de toute contrainte (voir trait d'axe à la figure 20), est inférieur au périmètre de jante PjM, qui est ici constant sur toute la zone de support. Un tel pneumatique comporte une carcasse radiale tubulaire, c'est à dire présente au moins dans les flancs et dans la base de montage. Dans la zone correspondant à la base de montage au moins, il ne comporte pas de tringle ou d'autre types de renforcements susceptibles de s'opposer aux mouvements d'extensibilité radiale de ladite base de montage. On peut monter et démonter le pneumatiquc sur et hors de la jante par enfilage comme cela a été expliqué pour la première famille de réalisation, avec l'assistance d'une mise en dépression de la cavité interne 70. Pour se déformer comme monter à la figure 20, le pneumatique "s'appuie" sur la partie sommet de celui-ci. Un tel pneumatique 7 se monte et se positionne sur une jante 72 par le seul serrage naturel lorsque l'on supprime la dépression (frettage réparti).

Les pneumatiques 6 et 7 sont confectionnés et vulcanisés sur un support de forme convenable. Les pneumatiques sont extraits de leur support après la vulcanisation de la même façon que lors du démontage du pneumatique sur et hors de la jante, à savoir en faisant appel à une mise en dépression de la cavité interne de ces pneumatiques. Ce sont aussi des exemples de moyens de blocage non localisés, mais répartis axialement.

Dans ces sixième et septième variantes également, lorsque la pression interne de la cavité pneumatique 50 devient nulle, le pneumatique reste sur sa jante. Selon la pression résiduelle de contact qu'exerce la paroi radialement interne 630, 730 du pneumatique sur la jante 62, 72, le pneumatique jouit d'aptitudes à fonctionner à pression nulle sensiblement les mêmes que les solutions couramment en usage dans l'état actuel de la technique.

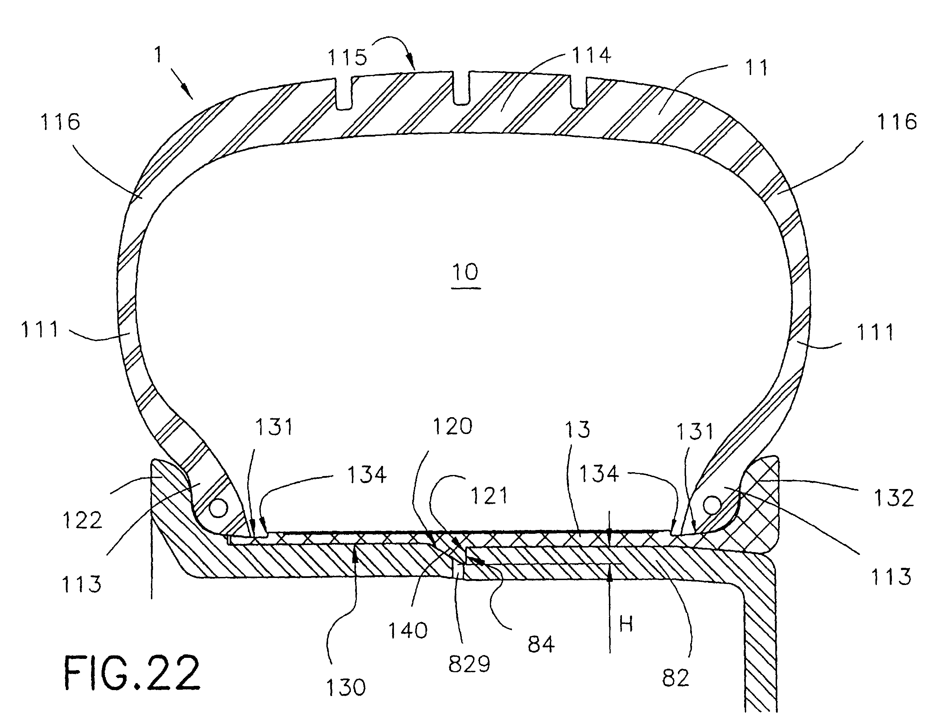

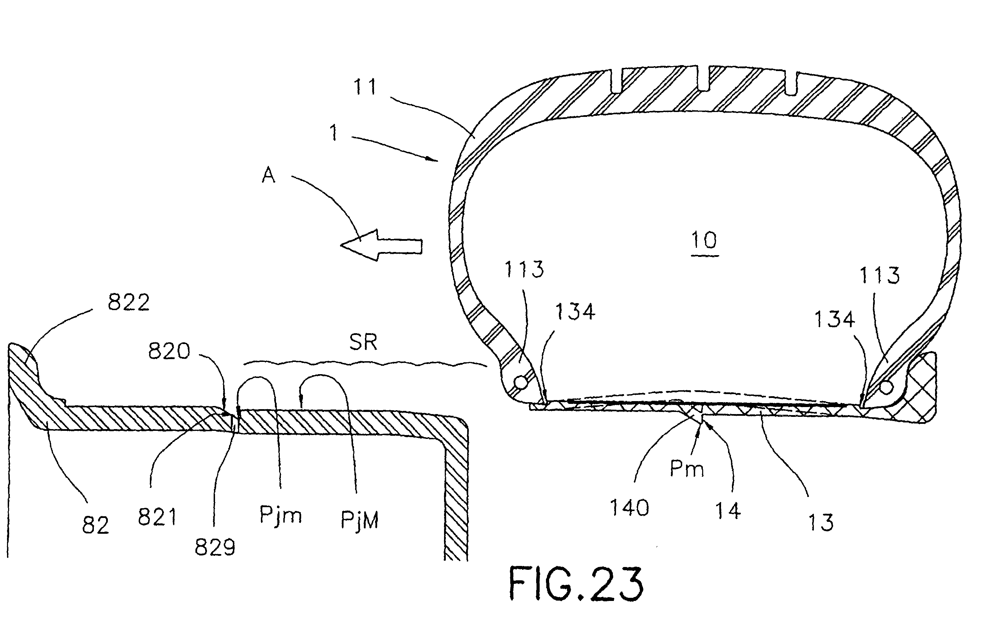

Enfin, les figures 22 et 23 illustrent le cas d'un montage et d'un démontage sans mettre l'enceinte du pneumatique en dépression. La jante 82 comporte un seul rebord 822. Elle comporte une rainure 820 et une portée complémentaire 821 destinées à coopérer avec la protubérance 140. La jante 82 adaptée comporte au moins un orifice 829 permettant d'exercer une pression radiale sur les moyens de blocage pour les contraindre radialement vers l'extérieur.

La forme de la virole 13 à l'état libre de toutes contraintes est celle tracée en traits pleins. La flexibilité de la virole 13 lui permet cependant de prendre facilement la déformation représentée en traits interrompus à la figure 23. Le montage s'effectue par simple translation relative, en en contraignant la virole à se déformer lorsqu'elle chevauche la jante 82. Après translation relative, lorsque le bourrelet 113 de gauche à la figure 23 est arrivé en butée contre le rebord 822 de la jante 82 (c'est à dire lorsqu'on se trouve dans la configuration de la figure 22), la protubérance 140 s'engage alors dans la rainure 820, ce qui permet l'enclipsage automatique du pneumatique sur la jante.

Pour démonter le pneumatique hors de sa jante 82, on procède de la façon suivante. On annule d'abord la pression de gonflage à l'intérieur de l'enceinte pneumatique 10. Puis on injecte un fluide sous pression entre la jante et la base de montage par l'orifice 829, ou bien on appuie sur la protubérance par plusieurs orifices tels que l'orifice 829, afin de dégager la protubérance 140 hors de la rainure 820. On termine en faisant glisser axialement le pneumatique par rapport à la jante jusqu'à sortir complètement la virole hors de la jante. Si on injecte un fluide sous pression entre la jante et la base de montage, la pression de celui-ci se répartit assez facilement sous toute la périphérie de la base de montage par le jeu apparaissant entre la jante et la base de montage (l'orifice 829, en service normal, sert à éventer l'espace confiné entre la base de montage et la jante).

Plusieurs mises en oeuvre de l'invention viennent d'être décrites. L'invention peut être adoptée dans beaucoup de contextes différents. La jante peut être intégrée à un moteur hydraulique, ou bien être constituée essentiellement par n'importe quelle pièce mécanique qui peut être montée à demeure sur le véhicule, puisqu'il n'est plus nécessaire de démonter la jante pour démonter le pneumatique. Par exemple, pour une application aux véhicules de tourisme, si la jante n'est ni démontable, ni étanche, on peut très bien prévoir une trappe de visite pour l'inspection des freins, et pour le remplacement des plaquettes de freinage.

Rappelons que, sur un véhicule de tourisme, les sollicitations transversales les plus importantes apparaissent en virage, sur les pneumatiques situés à l'extérieur du virage, et tendent à repousser le pneumatique vers le véhicule. Dès lors, dans les variantes asymétriques (figures 1 à 6), il est avantageux que le crochet de jante soit situé du côté intérieur du véhicule.

Différentes variantes peuvent être mises en oeuvre. Par exemple, la ou les portées de blocage peuvent être interrompues localement, par exemple pour le passage de la valve. Différents jeux fonctionnels peuvent être prévus. Par exemple, la valeur Pjm est le diamètre mini mesuré sur la jante, ce qui n'exclut pas par exemple qu'il y ait un jeu entre le fond de la rainure sur la jante et la protubérance sur le pneumatique.

La présente invention ouvre tout un champ de réalisations différentes possibles. Un pneumatique ou un ensemble pneumatique et jante conçu selon l'invention peut être monté, ou être démonté sans dépression dans la cavité interne du pneumatique. L'utilisation d'une dépression facilite l'opération, ou permet de concevoir des pneumatiques ou des ensembles qui ne se monteraient ou ne se démonteraient pas, ou très difficilement sans le recours à une dépression.

## Revendications

1. Pneumatique (1, 2, 3, 4, 5, 6, 7) torique comportant, vu en position de montage sur une jante (12, 22, 32, 42, 52, 62, 72, 82) adaptée, :
• deux flancs (111, 211, 311, 411)
• une partie sommet (114, 314, 414) comprenant la bande de roulement et reliée à l'extrémité radialement supérieure des flancs,
• une base de montage (13, 23) sur la jante, ladite base formant manchon s'étendant transversalement à partir de chaque flanc en direction de l'autre flanc, et étant apte à former un tore fermé définissant une enceinte étanche (10, 20, 30, 40, 70), ladite base constituant la paroi radialement la plus intérieure dudit tore,
• ladite base étant destinée à être montée sur la jante,
• des moyens de blocage , pour immobiliser axialement dans l'un des deux sens au moins le pneumatique sur la jante, lesdits moyens de blocage étant :
- aménagés sur la face radialement intérieure de la base (130)
- destinés à coopérer avec une portée (14) complémentaire aménagée sur la jante pour s'opposer à tout mouvement relatif entre pneumatique et jante axialement dans ledit sens au moins,
- aménagés dans une partie de la base qui présente un degré de flexibilité entre une position naturelle relâchée et une position contrainte radialement vers l'extérieur dans laquelle ces moyens de blocage sont libres de tout engagement avec ledit élément complémentaire, ladite partie de la base et les moyens de blocage étant conformés et constitués de façon à ce que, lorsque ladite enceinte est à la même pression que la pression atmosphérique prévalant hors de l'enceinte, les moyens de blocage sont engagés avec l'élément complémentaire pour que le pneumatique soit automatiquement bloqué dans ledit au moins un sens sur la jante, la libération des moyens de blocage imposant de soumettre ceux-ci à l'action de moyens extérieurs agissant pour faire prendre auxdits moyens de blocage ladite position contrainte radialement vers l'extérieur.

2. Pneumatique selon la revendication 1, dans lequel lesdits moyens de blocage comprennent un élément de blocage constitué sous la forme d'une protubérance (140, 240, 340, 440, 540) ou d'une rainure, aménagé sur la face radialement intérieure de la base axialement à une position intermédiaire, ledit élément de blocage ayant une hauteur (H) prédéterminée mesurée parallèlement à un rayon à partir de la face intérieure de la base, ladite portée complémentaire aménagée sur la jante étant adaptée audit élément de blocage.

3. Pneumatique selon la revendication 1 ou 2, comportant une partie sommet (114, 314, 414) comprenant une bande de roulement, dans lequel ledit degré de flexibilité est choisi pour que, lorsque le pneumatique est dans une configuration de tore fermé définissant une enceinte étanche, une mise en dépression de l'enceinte provoque un déplacement desdits moyens de blocage d'ampleur voulue vers les plus grands rayons avant de provoquer une déformation du sommet dont l'ampleur s'oppose audit déplacement desdits moyens vers les plus grands rayons.

4. Pneumatique selon la revendication 2, dans lequel l'élément de blocage comporte latéralement au moins une portée de blocage (14) sensiblement plane.

5. Pneumatique selon la revendication 4, comprenant deux portées de blocage (241 et 242, 341 et 342, 441 et 442, 541 et 542) sensiblement continues circonférentiellement et orientées sensiblement dans un plan perpendiculaire à l'axe de rotation et formant des faces orientées axialement de façon opposée l'une par rapport à l'autre, lesdites portées étant destinées à coopérer chacune avec une portée complémentaire aménagée sur la jante pour immobiliser axialement le pneumatique par rapport à la jante dans les deux directions axiales.

6. Pneumatique selon l'une des revendications 1 à 5, dans lequel la dite base de montage est sensiblement cylindrique et parallèle à l'axe du pneumatique.

7. Pneumatique selon l'une des revendications 1 à 6, dans lequel la base de montage forme une seule pièce avec le pneumatique.

8. Pneumatique selon la revendication 7, formant un tore fendu au niveau de la base de montage, de sorte que celle-ci comporte deux demi-manchons reliés et moulés intégralement chacun avec l'un des flancs.

9. Pneumatique selon la revendication 8, dans lequel les demi-manchons se terminent par des extrémités de formes complémentaires (351 et 352, 451 et 452), à emboîtement possible.

10. Pneumatique selon la revendication 9, dans lequel l'une des extrémités comporte une languette (36), l'autre extrémité comportant une gorge (37) à faces latérales parallèles.

11. Pneumatique selon la revendication 8, dans lequel les demi-manchons comportent des extrémités de forme identique (530), et dans lequel un élément formant entretoise (58) est inséré entre lesdites extrémités pour fermer l'enceinte et assurer étanchéité.

12. Pneumatique selon la revendication 11, dans lequel les extrémités latérales de ladite entretoise (58) comportent des lèvres (580) destinées à appuyer latéralement et radialement vers l'axe de rotation sur les extrémités des demi-manchons et comportent des pattes (581) insérées radialement sous les extrémités des demi-manchons.

13. Pneumatique selon la revendication 7, formant un tore fermé présentant des flancs latéraux, de sorte que la base de montage forme un manchon unique reliant les et moulé intégralement avec les flancs.

14. Pneumatique selon l'une des revendications 1 à 6, constitué d'une enveloppe de pneumatique et d'une virole (13, 23) séparable de l'enveloppe de pneumatique, la virole constituant la base de montage, ladite enveloppe de pneumatique étant constituée essentiellement de deux flancs et d'une partie sommet comprenant une bande de roulement, dans laquelle chaque flanc se termine radialement vers l'intérieur par un bourrelet (113, 213), ladite virole étant rapportée sous et reliant les bourrelets, de sorte que la base de montage, après insertion et montage sous les bourrelets, forme un manchon unique reliant les flancs et définissant avec l'enveloppe de pneumatique un tore fermé comportant une enceinte étanche.

15. Pneumatique selon la revendication 14, dans lequel ladite virole est pour l'essentiel en matière plastique.

16. Pneumatique selon la revendication 15, comportant des fentes (137) orientées axialement afin de permettre le déplacement de la ou desdites portées dans le sens radial, lesdites fentes étant obturées par une matière (136) à très faible module d'élasticité afin de rendre ladite enceinte étanche.

17. Pneumatique selon l'une des revendications 14 à 16, dans lequel la virole comporte un seul rebord extérieur (132) s'étendant radialement et coopérant avec la face axialement extérieure de l'un des bourrelets, et est destinée à être monté sur une jante comportant un seul rebord s'étendant radialement et coopérant avec la face axialement extérieure de l'autre des bourrelets.

18. Pneumatique selon l'une des revendications 14 à 16, dans lequel la virole comporte deux rebords extérieurs (232 et 233) s'étendant radialement et coopérant avec la face axialement extérieure desdits bourrelets.

19. Pneumatique selon l'une des revendications 17 ou 18, comportant un rebord intérieur (234) s'étendant radialement et disposé axialement à l'intérieur du rebord extérieur, coopérant avec la face axialement intérieure d'un des bourrelets.

20. Pneumatique selon l'une des revendications 14 à 19, dans lequel la structure de la virole est réalisée de façon à ce qu'elle autorise l'expansion radiale des moyens de blocage, et à ce qu'elle puisse être courbée en haricot pour être insérée sous les bourrelets de l'enveloppe de pneumatique.

21. Pneumatique selon l'une des revendications 1, 3, 6 à 20, dans lequel lesdits moyens de blocage sont constitués par la partie médiane de la base qui forme une ceinture élastique radialement et répartie axialement, ladite portée complémentaire aménagée sur la jante étant adaptée à ladite ceinture élastique.

22. Pneumatique selon l'une des revendications 1 à 21, dans lequel la jante adaptée comporte au moins un orifice permettant d'exercer une pression radiale sur les moyens de blocage pour les contraindre radialement vers l'extérieur.

23. Ensemble comportant un pneumatique torique (1, 2, 3, 4, 5, 6, 7), tel que défini selon l'une des revendications 1 à 21, et une jante (12, 22, 32, 42, 52, 62, 72, 82) en une seule pièce, dans lequel, la base de montage sur la jante du pneumatique comporte une partie concourant au blocage sur la jante, située axialement entre les flancs, ladite partie concourant au blocage présentant à l'état libre de toute contrainte un périmètre minimal (Pm),
la jante comportant une zone de support dans la projection radiale de ladite base lorsque l'on considère le pneumatique en position de montage sur la jante, ladite zone de support présentant un périmètre minimal (Pjm) en regard de la partie de la partie concourant au blocage et, axialement d'un côté (SR) au moins de la partie présentant le périmètre minimal (Pjm), une zone présentant un périmètre maximal (PjM) plus grand que (Pjm), la totalité de la jante située du côté (SR) présentant en toute position axiale un périmètre inférieur à (PjM),
ledit périmètre minimal (Pm) de la partie concourant au blocage étant strictement inférieur au périmètre maximal (PjM) de jante, ladite partie concourant au blocage étant extensible élastiquement,
de telle sorte que, lorsque le pneumatique est en place sur la jante, la partie concourant au blocage coopère avec la jante pour s'opposer à tout mouvement relatif du pneumatique par rapport à la jante au moins axialement vers le côté (SR).

24. Virole (13, 23) destinée à être montée sous les bourrelets dune enveloppe de pneumatique comportant un sommet, deux flancs terminés chacun par un bourrelet, pour constituer, après montage des bourrelets sur la virole, un pneumatique, tel que défini selon l'une des revendications 14 à 21, destiné à être monté sur une jante adaptée, ladite virole comprenant deux sièges (131, 231) pour recevoir chacun un bourrelet et comportant des moyens de blocage pour immobiliser axialement dans l'un des deux sens au moins le pneumatique sur la jante, lesdits moyens de blocage étant :
• aménagés sur la face radialement intérieure de la virole,
• destinés à coopérer avec une portée complémentaire aménagée sur la jante pour s'opposer à tout mouvement relatif entre pneumatique et jante axialement dans ledit sens au moins,
• aménagés dans une partie de la virole qui présente un degré de flexibilité entre une position naturelle relâchée et une position contrainte radialement vers l'extérieur dans laquelle ces moyens de blocage sont libres de tout engagement avec ledit élément complémentaire, ladite partie de la base et les moyens de blocage étant conformés et constitués de façon à ce que :
- lorsque ladite enceinte est à la même pression que la pression atmosphérique prévalant hors de l'enceinte, les moyens de blocage sont engagés avec l'élément complémentaire pour que le pneumatique soit automatiquement bloqué dans ledit au moins un sens sur la jante,
- la libération des moyens de blocage imposant de soumettre ceux-ci à l'action de moyens extérieurs agissant pour faire prendre auxdits moyens de blocage ladite position contrainte radialement vers l'extérieur.

25. Procédé de montage sur une jante d'un pneumatique torique fermé formant une enceinte étanche, tel que défini selon l'une des revendications 1 à 21, ledit procédé comportant les étapes suivantes :
• lorsque le pneumatique est dans une configuration de tore fermé définissant une enceinte étanche, mettre en dépression l'enceinte jusqu'à provoquer un déplacement des moyens de blocage vers les plus grands rayons d'une ampleur suffisante,
• enfiler ou achever d'enfiler ledit pneumatique sur ladite jante jusqu'à ce qu'il prenne sa position axiale finale par rapport à la jante,
• annuler la dépression de façon à ce que les moyens de blocage se déplacent vers les rayons plus petits.

26. Procédé de montage selon la revendication 25 dans lequel, lorsque l'on a commencé à enfiler le pneumatique et avant que l'extrémité radialement intérieure des flancs prenne sa position axiale finale par rapport à la jante, on diminue la dépression de sorte que les moyens d'immobilisation coopèrent avec la jante avant de prendre sa place finale face à ladite portée complémentaire.

27. Procédé de montage selon l'une des revendications 25 à 26, utilisant une base formant un élément séparable d'une enveloppe de pneumatique, dans lequel pour créer la configuration en tore fermé, on courbe ladite base en haricot pour l'insérer sous les bourrelets de l'enveloppe de pneumatique, et on l'ajuste sous les bourrelets.

28. Procédé de démontage hors d'une jante d'un pneumatique torique fermé formant une enceinte étanche, tel que défini selon l'une des revendications 1 à 21, ledit procédé comportant les étapes suivantes :
• créer une pression plus grande entre jante et pneumatique que dans l'enceinte étanche jusqu'à provoquer un déplacement des moyens de blocage vers les plus grands rayons d'une ampleur suffisante,
• retirer ledit pneumatique de ladite jante en le faisant glisser axialement.

29. Procédé de démontage selon la revendication 28, dans lequel ladite pression plus grande est obtenue en dégonflant ledit pneumatique et en mettant en dépression l'enceinte jusqu'à provoquer un déplacement des moyens d'immobilisation vers les plus grands rayons d'une ampleur suffisante.

## Claims

1. Toroidal tyre (1, 2, 3, 4, 5, 6, 7) comprising, as seen in the mounting position on a suitable rim (12, 22, 32, 42, 52, 62, 72, 82):
• two sidewalls (111, 211, 311, 411);
• a crown part (114, 314, 414) comprising the tread and joined to the radially upper end of the sidewalls,
• a mounting base (13, 23) on the rim, said base forming a sleeve extending transversely from each sidewall in the direction of the other sidewall, and being capable of forming a closed toroid defining a tight chamber (10, 20, 30, 40, 70), said base constituting the radially innermost wall of said toroid;
• said base being intended to be mounted on the rim;
• securing means to axially immobilise the tyre on the rim in one of the two directions at least, said securing means being:
- arranged on the radially inner face of the base (130);
- intended to cooperate with a complementary bearing surface (14) arranged on the rim in order to oppose any relative movement between tyre and rim axially in said direction at least;
- arranged in a part of the base which has a degree of flexibility between a relaxed natural position and a position radially stressed outwards, in which these securing means are free of any engagement with said complementary element, said part of the base and the securing means being so shaped and constituted that, when said chamber is at the same pressure as the atmospheric pressure prevailing outside the chamber, the securing means are engaged with the complementary element, so that the tyre will be automatically secured in said at least one direction on the rim, release of the securing means requiring subjecting the latter to the action of outside means serving to cause said securing means to adopt said position stressed radially outwards.

2. Tyre according to Claim 1, in which said securing means comprise a locking element made in the form of a protuberance (140, 240, 340, 440, 540) or a groove, arranged on the radially inner face of the base axially at an intermediate position, said locking element having a predetermined height (H) measured parallel to a radius from the inner face of the base, said complementary bearing surface arranged on the rim being adapted to said locking element.

3. Tyre according to Claim 1 or 2, comprising a crown part (114, 314, 414) comprising a tread, in which said degree of flexibility is chosen so that, when the tyre is in a closed toroidal configuration defining a tight chamber, a pressure reduction of the chamber produces a displacement of said securing means of desired extent towards the wider radii before producing deformation of the crown, the extent of which opposes said displacement of said means towards the wider radii.

4. Tyre according to Claim 2, in which the locking element laterally comprises at least one substantially flat locking surface (14).

5. Tyre according to Claim 4, comprising two locking surfaces (241 and 242, 341 and 342, 441 and 442, 541 and 542) that are substantially continuous circumferentially and oriented substantially in a plane perpendicular to the axis of rotation and form faces oriented axially opposing one another, said surfaces being intended each to cooperate with a complementary bearing surface arranged on the rim in order to immobilise the tyre axially in relation to the rim in both axial directions.

6. Tyre according to one of Claims 1 to 5, in which said mounting base is substantially cylindrical and parallel to the axis of the tyre.

7. Tyre according to one of Claims 1 to 6, in which the mounting base forms a single piece with the tyre.

8. Tyre according to Claim 7, forming a toroid split at the mounting base, so that the latter comprises two half-sleeves, each integrally joined and moulded with one of the sidewalls.

9. Tyre according to Claim 8, in which the half-sleeves end in ends of complementary shapes (351 and 352, 451 and 452), with jointing possible.

10. Tyre according to Claim 9, in which one of the ends comprises a tongue (36), the other end comprising a groove (37) with parallel lateral faces.

11. Tyre according to Claim 8, in which the half-sleeves comprise ends of identical shape (530), and in which an element forming a brace (58) is inserted between said ends to close the chamber and ensure tightness.

12. Tyre according to Claim 11, in which the lateral ends of said brace (58) comprise lips (580) intended to bear laterally and radially towards the axis of rotation on the ends of the half-sleeves and comprise fastening hooks (581) inserted radially under the ends of the half-sleeves.

13. Tyre according to Claim 7, forming a closed toroidal tyre having lateral sidewalls, so that the mounting base forms a single sleeve joining the [sidewalls] and integrally moulded with them.

14. Tyre according to one of Claims 1 to 6, consisting of a tyre casing and a ring (13, 23) separable from the tyre casing, the ring constituting the mounting base, said tyre casing consisting essentially of two sidewalls and a crown part comprising a tread, in which each sidewall ends radially inwards in a bead (113, 213), said ring being brought back under and joining the beads, so that the mounting base, after insertion and mounting under the beads, forms a single sleeve joining the sidewalls and defining with the tyre casing a closed toroid containing a tight chamber.

15. Tyre according to Claim 14, in which said ring is essentially of plastics material.

16. Tyre according to Claim 15, comprising axially oriented slits (137) to permit the displacement of said bearing surface(s) radially, said slits being sealed with a material (136) with very low modulus of elasticity in order to render said chamber tight.

17. Tyre according to one of Claims 14 to 16, in which the ring comprises a single outer flange (132) extending radially and cooperating with the axially outer face of one of the beads, and is intended to be mounted on a rim comprising a single flange extending radially and cooperating with the axially outer face of the other one of the beads.

18. Tyre according to one of Claims 14 to 16, in which the ring comprises two outer flanges (232 and 233) extending radially and cooperating with the axially outer face of said beads.

19. Tyre according to one of Claims 17 or 18, comprising an inner flange (234) extending radially and placed axially inside the outer flange, cooperating with the axially inner face of one of the beads.

20. Tyre according to one of Claims 14 to 19, in which the structure of the ring is so formed that it allows for radial expansion of the securing means and can be curved like a kidney bean in order to be inserted under the beads of the tyre casing.

21. Tyre according to one of Claims 1, 3 or 6 to 20, in which said securing means are constituted by the median part of the base, which forms an elastic belt radially and spread out axially, said complementary bearing surface arranged on the rim being adapted to said elastic belt.

22. Tyre according to one of Claims 1 to 21, in which the suitable rim comprises at least one orifice enabling radial pressure to be exerted on the securing means to force them radially towards the outside.

23. Assembly comprising a toroidal tyre (1, 2, 3, 4, 5, 6, 7) as defined in one of Claims 1 to 21, and a rim (12, 22, 32, 42, 52, 62, 72, 82) in a single piece, in which the mounting base on the rim of the tyre comprises a concurrent locking part on the rim, situated axially between the sidewalls, said concurrent locking part presenting, in the stress-free state, a minimum perimeter (Pm),
the rim comprising a support area in the radial projection of said base, when the tyre is considered in the mounting position on the rim, said support area having a minimum perimeter (Pjm) opposite the portion of the concurrent locking part and, axially on one side (SR) at least of the part having the minimum perimeter (Pjm), an area having a maximum perimeter (PjM) greater than (PJm), the total rim situated on the side (SR) having a perimeter less than (PjM) in any axial position,
said minimum perimeter (Pm) of the concurrent locking part being strictly less than the maximum rim perimeter (PjM), said concurrent locking part being elastically extensible,
so that when the tyre is in place on the rim, the concurrent locking part cooperates with the rim to oppose any relative movement of the tyre in relation to the rim at least axially towards the side (SR).

24. Ring (13, 23) intended to be mounted under the beads of a tyre casing comprising a crown, two sidewalls each ending in a bead, in order to form, after mounting of the beads on the ring, a tyre as defined in one of Claims 14 to 21, intended to be mounted on a suitable rim, said ring comprising two seats (131, 231) for each receiving a bead and comprising securing means for axially immobilising the tyre on the rim in one of the two directions at least, said securing means being:
• arranged on the radially inner face of the ring;
• intended to cooperate with a complementary bearing surface arranged on the rim in order to oppose any relative movement between tyre and rim axially in said direction at least;
• arranged in a part of the ring which has a degree of flexibility between a relaxed natural position and a position radially stressed outwards, in which these securing means are free of any engagement with said complementary element, said part of the base and the securing means being so shaped and constituted that:
- when said chamber is at the same pressure as the atmospheric pressure prevailing outside the chamber, the securing means are engaged with the complementary element, so that the tyre will be automatically secured in said one direction at least on the rim,
- the release of the securing means requiring subjecting the latter to the action of outside means serving to make said securing means take said position stressed radially outwards.

25. Method of mounting on a rim of a closed toroidal tyre forming a tight chamber, as defined in one of Claims 1 to 21, said method comprising the following steps:
• when the tyre is in a closed toroid configuration defining a tight chamber, reducing the pressure of the chamber until a sufficient displacement of the securing means towards the wider radii is produced;
• fitting or completing fitting said tyre on said rim until it adopts its final axial position relative to the rim;
• eliminating the partial vacuum so that the securing means are displaced towards the narrower radii.

26. Method of mounting according to Claim 25, in which, when fitting of the tyre has begun and before the radially inner end of the sidewalls adopts its final axial position relative to the rim, the pressure is reduced so that the securing means cooperate with the rim before taking the final position opposite said complementary bearing surface.

27. Method of mounting according to one of Claims 25 to 26, using a base forming an element separable from a tyre casing, in which, to create the closed toroid configuration, said base is curved like a kidney bean in order to insert it under the beads of the tyre casing, and it is adjusted under the beads.

28. Method of demounting off the rim of a closed toroidal tyre forming a tight chamber, as defined in one of Claims 1 to 21, said method comprising the following steps:
• creating a greater pressure between rim and tyre than in the tight chamber, until a sufficient displacement of the securing means towards the wider radii is produced;
• removing said tyre from said rim by sliding it axially.

29. Method of demounting according to Claim 28, in which said greater pressure is obtained by deflating said tyre and reducing the pressure in the chamber until a sufficient displacement of the immobilisation means towards the wider radii is produced.

## Patentansprüche

1. Torusförmiger Reifen (1, 2, 3, 4, 5, 6, 7), der, gesehen in der Montagelage auf einer angepaßten Felge (12, 22, 32, 42, 52, 62, 72, 82), die folgenden Merkmale aufweist:
• zwei Flanken (111, 211, 311, 411),
• einen Scheitelabschnitt (114, 314, 414), der die Lauffläche aufweist und mit dem radial oberen Ende der Flanken verbunden ist,
• eine Montagebasis (13, 23) auf der Felge, wobei die genannte Basis eine sich quer erstreckende Muffe bildet, die von jeder Flanke in Richtung der anderen Flanke ausgeht, und die dazu eingerichtet ist, einen geschlossenen Torus zu bilden, der eine dichte Umhüllung (10, 20, 30, 40, 70) festlegt, wobei die genannte Basis die radial innerste Wand des genannten Torus bildet,
• die genannte Basis ist dazu bestimmt, auf der Felge montiert zu werden, und
• Blockierungsmittel, um axial in mindestens der einen zweier Richtungen den Reifen auf der Felge unbeweglich festzulegen, wobei die Blockierungsmittel:
- auf der radial inneren Fläche (130) der Basis eingebracht sind,
- dazu bestimmt sind, mit einem komplementären Bereich (14) zusammenzuwirken, der auf der Felge eingebracht ist, um sich jeglicher Relativbewegung zwischen dem Reifen und der Felge mindestens in der genannten Richtung zu widersetzen, und
- in einen Teil der Basis eingebracht sind, der einen Grad der Flexibilität zwischen einer natürlichen, entlasteten Lage und einer radial nach aussen belasteten Lage aufweist, in der diese Blockierungsmittel von jedem Eingriff mit dem genannten, komplementären Element frei sind, wobei der genannte Teil der Basis und die Blockierungsmittel übereinstimmend und derart ausgebildet sind, daß dann, wenn die genannte Umhüllung sich unter demselben Druck wie der Atmosphärendruck befindet, der außerhalb der Umhüllung vorliegt, die Blockierungsmittel mit dem komplementären Element in Eingriff stehen, damit der Reifen automatisch in der genannten, mindestens einen Richtung auf der Felge blockiert ist, wobei die Freisetzung der Blockierungsmittel es erfordert, diese der Tätigkeit von äußeren Mitteln auszusetzen, die einwirken, um die genannten Blockierungsmittel die genannte, belastete Lage radial nach außen einnehmen zu lassen.

2. Reifen nach Anspruch 1, worin die Blockierungsmittel ein Blockierungselement aufweisen, das in Form eines Vorsprungs (140, 240, 340, 440, 540) oder einer Rille ausgebildet ist, der bzw. die auf der radial inneren Fläche der Basis axial in einer Zwischenlage eingebracht ist, wobei das genannte Blockierungselement eine bestimmte Höhe (H) aufweist, parallel zu einem Radius gemessen, von der Innenfläche der Basis ausgehend, und wobei der genannte, komplementäre Bereich an das genannte Blockierungselement angepaßt ist.

3. Reifen nach Anspruch 1 oder 2, mit einem Scheitelabschnitt (114, 314, 414), der eine Lauffläche aufweist, worin der genannte Flexibilitätsgrad so gewählt ist, damit dann, wenn sich der Reifen in der Ausbildung eines geschlossenen Torus befindet, der eine dichte Umhüllung festlegt, das Versetzen der Umhüllung in Unterdruck eine Verlagerung der genannten Blockierungsmittel im gewünschten Ausmaß zu den größten Radien hin hervorruft, bevor es eine Verformung des Scheitels in einem Ausmaß hervorruft, das sich der genannten Verlagerung der genannten Mittel zu den größten Radien hin entgegensetzt.

4. Reifen nach Anspruch 2, worin das Blockierungselement seitlich mindestens einen im wesentlichen ebenen Blockierungsbereich (14) aufweist.

5. Reifen nach Anspruch 4, mit zwei Blockierungsbereichen (241 und 242, 341 und 342, 441 und 442, 541 und 542), die in Umfangsrichtung im wesentlichen durchgehend sind und im wesentlichen in einer Ebene ausgerichtet sind, die senkrecht zur Drehachse verläuft, und axial ausgerichtete Flächen bildet, und zwar in einer Weise, daß die eine der anderen entgegengesetzt ist, wobei die genannten Bereiche dazu bestimmt sind, daß jeder mit einem komplementären Bereich zusammenwirkt, der auf der Felge eingebracht ist, um den Reifen axial bezüglich der Felge in den beiden axialen Richtungen festzulegen.

6. Reifen nach einem der Ansprüche 1 bis 5, worin die genannte Montagebasis im wesentlichen zylindrisch ist und parallel zur Achse des Reifens verläuft.

7. Reifen nach einem der Ansprüche 1 bis 6, worin die Montagebasis zusammen mit dem Reifen ein einziges Stück bildet.

8. Reifen nach Anspruch 7, der einen Torus bildet, der auf Höhe der Montagebasis gespalten ist, so daß dieser zwei Halb-Muffen aufweist, von denen jede integriert mit einer der Flanken verbunden und abgeformt ist.

9. Reifen nach Anspruch 8, worin die Halb-Muffen in Enden (351 und 352, 451 und 452) mit komplementären Formen mit der Möglichkeit der Einschachtelung auslaufen.

10. Reifen nach Anspruch 9, worin eines der Enden eine Zunge (36) aufweist, während das andere Ende eine Nut (37) mit parallelen Seitenflächen aufweist.

11. Reifen nach Anspruch 8, worin die Halb-Muffen Enden (530) mit identischer Form aufweisen, und worin ein Element (58), das ein Distanzrohr bildet, zwischen die genannten Enden eingefügt ist, um die Umhüllung zu schließen und die Abdichtung sicherzustellen.

12. Reifen nach Anspruch 11, worin die seitlichen Enden des genannten Distanzrohrs (58) Lippen (580) aufweisen, die dazu bestimmt sind, seitlich und radial zur Drehachse hin auf den Enden der Halb-Muffen aufzuliegen, und Krempen (581) aufweisen, die radial unter die Enden der Halb-Muffen eingesetzt werden.

13. Reifen nach Anspruch 7, der einen geschlossenen Torus bildet, der seitliche Flanken aufweist, und zwar derart, daß die Montagebasis eine einheitliche Muffe bildet, die die Flanken verbindet und mit diesen integriert abgeformt ist.

14. Reifen nach einem der Ansprüche 1 bis 6, der von einem Reifenmantel und einem Ring (13, 23) gebildet ist, der vom Reifenmantel abtrennbar ist, wobei der Ring die Montagebasis bildet, der genannte Reifenmantel im wesentlichen aus zwei Flanken und einem Scheitelabschnitt gebildet ist, der eine Lauffläche aufweist, worin jede Flanke radial nach innen durch einen Wulst (113, 213) endet, und der genannte Ring unter den Wülsten aufgesetzt ist und diese verbindet, und zwar derart, daß die Montagebasis nach dem Einführen und der Montage unter den Wülsten eine einheitliche Muffe bildet, die die Flanken verbindet und zusammen mit dem Reifenmantel einen geschlossenen Torus bildet, der eine dichte Umhüllung aufweist.

15. Reifen nach Anspruch 14, worin der genannte Ring im wesentlichen aus Kunststoff besteht.

16. Reifen nach Anspruch 15, mit Schlitzen (137), die axial ausgerichtet sind, um die Verlagerung des oder der Bereiche(s) in radialer Richtung zu gestatten, wobei die Schlitze von einem Material (136) mit sehr geringem Elastizitätsmodul verdeckt sind, um die genannte Umhüllung abzudichten.

17. Reifen nach einem der Ansprüche 14 bis 16, worin der Ring einen einzige, äußere Umrandung (132) aufweist, die sich radial erstreckt und mit der axial äußeren Fläche des einen der Wülste zusammenwirkt, und dazu bestimmt ist, auf einer Felge montiert zu werden, die eine einzige Umrandung aufweist, die sich radial erstreckt und mit der axial äußeren Fläche des anderen der Wülste zusammenwirkt.

18. Reifen nach einem der Ansprüche 14 bis 16, worin der Ring zwei äussere Umrandungen (232 und 233) aufweist, die sich radial erstrecken und mit der axial äußeren Fläche der genannten Wülste zusammenwirkt.

19. Reifen nach einem der Ansprüche 17 oder 18, mit einer inneren Umrandung (234), die sich radial erstreckt, axial auf der Innenseite der äusseren Umrandung angeordnet ist und mit der axial inneren Fläche des einen der Wülste zusammenwirkt.

20. Reifen nach einem der Ansprüche 14 bis 19, worin die Struktur des Ringes derart hergestellt ist, daß er die radiale Aufweitung der Blockierungsmittel gestattet, und daß er bohnenförmig gekrümmt sein kann, um unter den Wülsten des Reifenmantels eingeführt zu werden.

21. Reifen nach einem der Ansprüche 1, 3 und 6 bis 20, worin die genannten Blockierungsmittel vom mittleren Teil der Basis gebildet sind, die radial einen elastischen Gürtel bildet und axial verteilt ist, wobei der genannte, komplementäre Bereich, der auf der Felge eingebracht ist, an den genannten, elastischen Gürtel angepaßt ist.

22. Reifen nach einem der Ansprüche 1 bis 21, worin die angepaßte Felge mindestens eine Öffnung aufweist, die es gestattet, einen radialen Druck auf die Blockierungsmittel auszuüben, um sie radial nach außen zu belasten.

23. Baugruppe mit einem torusförmigen Reifen (1, 2, 3, 4, 5, 6, 7), wie er nach einem der Ansprüche 1 bis 21 definiert ist, und mit einer einstückigen Felge (12, 22, 32, 42, 52, 62, 72, 82), worin die Montagebasis auf der Felge des Reifens einen zur Blockierung auf der Felge mitwirkenden Teil aufweist, der axial zwischen den Flanken gelegen ist, wobei der genannte, bei der Blockierung mitwirkende Teil in von jeder Belastung freiem Zustand einen Mindestdurchmesser (Pm) aufweist,
die Felge eine Stützzone in der radialen Projektion der genannten Basis aufweist, wenn man den Reifen in der Montageposition auf der Felge betrachtet, die genannte Stützzone einen minimalen Durchmesser (Pjm) dem Teil des bei der Blockierung mitwirkenden Teils gegenüberliegend aufweist und axial von der einen Seite (SR) mindestens des Teils, der den minimalen Durchmesser (Pjm) aufweist, eine Zone aufweist, die den maximalen Durchmesser (PjM) aufweist, der größer ist als (Pjm), wobei die Gesamtheit der Felge, die auf der Seite (SR) gelegen ist, in jeder axialen Position einen Durchmesser aufweist, der kleiner ist als (PjM),
der genannte minimale Durchmesser (Pm) des bei der Blockierung zusammenwirkenden Teils streng kleiner ist als der maximale Durchmesser (PjM) der Felge, wobei der genannte, bei der Blockierung mitwirkende Teil elastisch dehnbar ist,
so daß, wenn der Reifen auf der Felge an Ort und Stelle sitzt, der bei der Blockierung mitwirkende Teil mit der Felge zusammenarbeitet, um sich jeder Relativbewegung des Reifens bezüglich der Felge mindestens axial gegen die Seite (SR) hin zu widersetzen.

24. Ring (13, 23), der dazu bestimmt ist, unter den Wülsten eines Reifenmantels montiert zu werden, der einen Scheitel und zwei Flanken aufweist, die jeweils in einem Wulst enden, um nach der Montage der Wülste auf dem Ring einen Reifen zu bilden, wie er nach einem der Ansprüche 14 bis 21 umrissen ist, der dazu bestimmt ist, auf einer dazu eingerichteten Felge montiert zu werden, wobei der genannte Ring zwei Sitze (131, 231) aufweist, um jeden der Wülste aufzunehmen, und Blockierungsmittel aufweist, um axial in mindestens einer Richtung den Reifen auf der Felge festzulegen, wobei die genannten Blockierungsmittel:
• auf der radial inneren Fläche des Rings eingebracht sind,
• dazu bestimmt sind, mit einem komplementären Bereich zusammenzuwirken, der auf der Felge eingebracht ist, um sich jeder Relativbewegung zwischen dem Reifen und der Felge axial mindestens in der genannten Richtung zu widersetzen, und
• in einen Teil des Rings eingebracht sind, der einen Grad der Flexibilität zwischen einer natürlichen, entlasteten Position und einer radial nach außen belasteten Position aufweist, in der diese Blockierungsmittel von jedem Eingriff mit dem genannten, komplementären Element freigesetzt sind, wobei der genannte Teil der Basis und die Blockierungsmittel so geformt und ausgebildet sind, daß:
- dann, wenn die genannte Umhüllung sich auf dem gleichen Druck befindet wie dem Atmosphärendruck, der außerhalb der Umhüllung vorliegt, die Blockierungsmittel in Eingriff mit dem komplementären Element stehen, damit der Reifen automatisch in der genannten, mindestens einen Richtung auf der Felge blockiert ist, und
- die Freisetzung des Blockierungsmittel erfordert, diese der Wirkung äußerer Mittel zu unterziehen, die einwirken, um die genannten Blockierungsmittel die genannte, radial nach außen belastete Position einnehmen zu lassen.

25. Verfahren zur Montage eines torusförmigen, geschlossenen Reifens auf einer Felge, der eine dichte Umhüllung bildet, wie er nach einem der Ansprüche 1 bis 21 umrissen ist, wobei das genannte Verfahren die folgenden Schritte umfaßt:
• wenn der Reifen sich in einer geschlossenen, torusförmigen Ausbildung befindet, die eine dichte Umhüllung festlegt, die Umhüllung in ein Vakuum versetzen, bis man eine Verlagerung der Blockierungsmittel in Richtung der größten Radien in einem ausreichenden Ausmaß hervorruft,
• Aufschieben oder Beendigen des Aufschiebens des genannten Reifens auf der genannten Felge, bis dieser seine axiale Endposition hinsichtlich der Felge einnimmt, und
• Aufheben des Vakuums auf eine derartige Weise, daß sich die Blockierungsmittel zu den kleinsten Radien hin verlagern.

26. Montageverfahren nach Anspruch 25, worin man, wenn man begonnen hat, den Reifen aufzuschieben, und bevor das radial innere Ende der Flanken seine axiale Endlage bezüglich der Felge eingenommen hat, das Vakuum bzw. den Unterdruck derart verringert, daß die Mittel zur unbeweglichen Festlegung mit der Felge zusammenwirken, bevor sie ihre endgültige Stelle am genannten, komplementären Bereich eingenommen haben.

27. Montageverfahren nach einem der Ansprüche 25 bis 26, unter Verwendung einer Basis, die ein abtrennbares Element eines Reifenmantels bildet, worin man zur Erzeugung der Ausbildung zum geschlossenen Torus die genannte Basis bohnenförmig krümmt, um sie unter die Wülste des Reifenmantels einzuführen, und man sie unter den Wülsten einstellt.

28. Verfahren zur Demontage eines Reifens in Form eines geschlossenen Torus, der eine geschlossene Umhüllung bildet, wie nach einem der Ansprüche 1 bis 21 umrissen, von einer Felge, wobei das genannte Verfahren die folgenden Schritte aufweist:
• Erzeugen eines größeren Drucks zwischen Felge und Reifen als in der dichten Umhüllung, bis eine Verlagerung der Blockierungsmittel in Richtung der größten Radien in einem ausreichenden Ausmaß hervorgerufen ist, und
• Zurückziehen des genannten Reifens von der genannten Felge, indem man ihn axial verrutschen läßt.

29. Demontageverfahren nach Anspruch 28, worin der genannte, größere Druck erreicht wird, indem man die Luft aus dem genannten Reifen abläßt und die Umhüllung unter Vakuum setzt, bis man eine Verlagerung der Mittel zur unbeweglichen Festlegung zu den größten Radien hin in einem ausreichenden Ausmaß hervorgerufen hat.
